# EUROPEAN PATENT APPLICATION

(11) **EP 4 836 569 A1**
(43) Date of publication of application: **04.11.2026**
(21) Application number: 23962921.5
(22) Date of filing: 29.12.2023
(51) Int. Cl.: H04W 72/23

(54) **METHOD FOR DETERMINING RESOURCE, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Hersina, Günter
(86) International application number: PCT/CN2023/143607
(87) International publication number: WO 2025/138247

(57) **Abstract**

Embodiments of the present disclosure relate to a method for determining a resource, a device, and a storage medium. The method comprises: receiving first information, wherein the first information can be used for configuring a reference signal resource, and the reference signal resource can be used for determining a first quasi co-location (QCL) parameter; receiving second information, wherein the second information can be used for determining random access resource information corresponding to the reference signal resource. In this way, a terminal device can determine a random access resource corresponding to a reference signal resource on the basis of second information, thereby achieving flexible management of random access resources.

## Description

### TECHNICAL FIELD

The disclosure relates to the field of communication technologies, and more particularly to a resource determination method and apparatus, and a storage medium.

### BACKGROUND

To improve the performance of wireless communication systems, transmission and reception based on a beam (also known as a quasi-colocation Type D parameter) may be used. A terminal may perform a beam measurement based on a reference signal resource and select a beam with a best beam measurement result to communicate with a base station, to improve the communication quality.

### SUMMARY

Embodiments of the disclosure provide resource determination methods and apparatuses, and a storage medium.

According to a first aspect of embodiments of the disclosure, a resource determination method is provided. The method includes:
receiving first information, where the first information is used to configure a reference signal resource, and the reference signal resource is configured to determine a first quasi-colocation (QCL) parameter; and
receiving second information, where the second information is configured to determine random access resource information corresponding to the reference signal resource.

According to a second aspect of embodiments of the disclosure, a resource determination method is provided. The method includes:
sending first information, where the first information is used to configure a reference signal resource, and the reference signal resource is configured to determine a first quasi-colocation (QCL) parameter; and
sending second information, where the second information is configured to determine random access resource information corresponding to the reference signal resource.

According to a third aspect of embodiments of the disclosure, a terminal is provided. The terminal includes:
a transceiver module, configured to receive first information, where the first information is used to configure a reference signal resource, and the reference signal resource is configured to determine a first quasi-colocation (QCL) parameter; and to receive second information, where the second information is configured to determine random access resource information corresponding to the reference signal resource.

According to a fourth aspect of embodiments of the disclosure, a network device is provided. The network device includes:
a transceiver module, configured to send first information, where the first information is used to configure a reference signal resource, and the reference signal resource is configured to determine a first quasi-colocation (QCL) parameter; and to send second information, where the second information is configured to determine random access resource information corresponding to the reference signal resource.

According to a fifth aspect of embodiments of the disclosure, a communication device is provided. The communication device includes: one or more processors. The communication device may be configured to perform optional implementations of the first aspect or the second aspect.

According to a sixth aspect of embodiments of the disclosure, a storage medium is provided. The storage medium has instructions stored thereon. When the instructions run on a communication device, the communication device is caused to perform the method according to optional implementations of the first aspect or the second aspect.

According to a seventh aspect of embodiments of the disclosure, a communication system is provided. The communication system includes: a terminal and a network device. The terminal is configured to perform the method according to optional implementations of the first aspect, and the network device is configured to perform the method according to optional implementations of the second aspect.

The technical solutions according to the embodiments of the disclosure may include the following beneficial effects: by receiving the first information, where the first information may be used to configure the reference signal resource, and the reference signal resource is configured to determine the QCL parameter; and by receiving second information, where the second information may be configured to determine the random access resource information corresponding to the reference signal resource, the terminal may determine a random access resource corresponding to the reference signal resource based on the second information, realizing a flexible management of the random access resource.

It is understandable that both the foregoing general description and the following detailed description are illustrative and explanatory only and are not restrictive of the disclosure.

### BRIEF DESCRIPTION OF THE DRAWINGS

To more clearly illustrate the technical solutions in the embodiments of the disclosure, accompanying drawings used for the description of the embodiments are introduced below. The following drawings are only some embodiments of the disclosure and do not impose specific limitations on the protection scope of the disclosure.
FIG. 1A is a schematic diagram of an architecture illustrating a communication system according to an embodiment of the disclosure.
FIG. 1B is a schematic diagram illustrating a mapping relationship between a synchronization signal block and a random access channel occasion according to an embodiment of the disclosure.
FIG. 2A is a schematic interaction diagram illustrating a resource determination method according to an embodiment of the disclosure.
FIG. 2B is a schematic interaction diagram illustrating a resource determination method according to an embodiment of the disclosure.
FIG. 2C is a schematic interaction diagram illustrating a resource determination method according to an embodiment of the disclosure.
FIG. 3A is a flowchart illustrating a resource determination method according to an embodiment of the disclosure.
FIG. 3B is a flowchart illustrating a resource determination method according to an embodiment of the disclosure.
FIG. 3C is a flowchart illustrating a resource determination method according to an embodiment of the disclosure.
FIG. 4A is a flowchart illustrating a resource determination method according to an embodiment of the disclosure.
FIG. 4B is a flowchart illustrating a resource determination method according to an embodiment of the disclosure.
FIG. 4C is a flowchart illustrating a resource determination method according to an embodiment of the disclosure.
FIG. 5A is a block diagram illustrating a terminal according to an embodiment of the disclosure.
FIG. 5B is a block diagram illustrating a network device according to an embodiment of the disclosure.
FIG. 6A is a block diagram illustrating a communication device according to an embodiment of the disclosure.
FIG. 6B is a block diagram illustrating a chip according to an embodiment of the disclosure.

### DETAILED DESCRIPTION

Embodiments of the disclosure provide resource determination methods and apparatuses, and a storage medium.

In a first aspect, embodiments of the disclosure provide a resource determination method. The method includes:
receiving first information, where the first information is used to configure a reference signal resource, and the reference signal resource is configured to determine a first quasi-colocation (QCL) parameter; and
receiving second information, where the second information is configured to determine random access resource information corresponding to the reference signal resource.

In the above embodiments, a terminal may determine a random access resource corresponding to the reference signal resource based on the second information, to realize a flexible management of the random access resource, so that the terminal initiates a random access via the random access resource, and thus notify a network device of the reference signal resource and the QCL parameter corresponding to the reference signal resource via the random access. This realizes a rapid notification of the QCL parameter, reducing notification latency and signaling overhead.

In combination with some embodiments of the first aspect, in some embodiments, the random access resource information includes at least one of:
a synchronization signal block (SSB) index;
a channel state information reference signal (CSI-RS) resource index;
a random access channel occasion (RO);
a preamble index; or
a first cell index, configured to determine a first cell corresponding to a random access resource.

In the above embodiments, the random access resource may be determined via at least one of the above information, so that the terminal may use the random access resource to initiate the random access.

In combination with some embodiments of the first aspect, in some embodiments, configuration information of the reference signal resource includes at least one of:
a reference signal resource identifier; or
a second cell index, configured to determine a second cell corresponding to a reference signal resource identifier, where the second cell is a serving cell or a non-serving cell of a terminal.

In the above embodiments, the reference signal resource may be determined via at least one of the above information, so that the terminal may perform a beam measurement based on the reference signal resource.

In combination with some embodiments of the first aspect, in some embodiments, the reference signal resource is a reference signal resource corresponding to the QCL parameter, the QCL parameter corresponds to a transmission configuration indication (TCI) state, and different TCI states correspond to different instances of random access resource information,
the TCI state includes at least one of a joint TCI state, a downlink TCI state, or an uplink TCI state; and
the random access resource information includes at least one of an RO or a preamble index.

In the above embodiments, the terminal may distinguish different TCI states via different random access resources.

In combination with some embodiments of the first aspect, in some embodiments, the second cell is the non-serving cell of the terminal,
the reference signal resource is an SSB of the second cell; or
the reference signal resource is a CSI-RS resource, and a source reference signal corresponding to the CSI-RS resource is an SSB of the second cell.

In the above embodiments, the beam measurement may be performed with any one of the SSB or the CSI-RS resource.

In combination with some embodiments of the first aspect, in some embodiments,
the random access resource information includes an SSB index, the SSB index in the random access resource information is an SSB index of a first cell, and the first cell is a serving cell or a non-serving cell of the terminal; or
the random access resource information includes a CSI-RS resource index, and a source reference signal corresponding to the CSI-RS resource index in the random access resource information is an SSB index of a first cell.

In the above embodiments, the random access resource may be determined via any one of the SSB or the CSI-RS resource.

In combination with some embodiments of the first aspect, in some embodiments,
the random access resource information does not include any RO, an RO corresponding to the random access resources is determined based on a first mapping relationship, and the first mapping relationship is a mapping relationship between SSB indexes of the first cell and ROs; and/or
the random access resource information does not include any preamble index, a preamble index corresponding to the random access resource is determined based on a second mapping relationship, and the second mapping relationship is a mapping relationship between SSB indexes of the first cell and preamble indexes.

In the above embodiments, the terminal may determine the RO and/or the preamble index via any one of the SSB or the CSI-RS resource.

In combination with some embodiments of the first aspect, in some embodiments, the first cell is the non-serving cell, and the method further includes:
receiving third information, where the third information is configured to determine the first mapping relationship and/or the second mapping relationship corresponding to the non-serving cell.

In the above embodiments, the terminal may determine the first mapping relationship and/or the second mapping relationship corresponding to the non-serving cell, to determine the RO and/or the preamble index based on an SSB of the non-serving cell.

In combination with some embodiments of the first aspect, in some embodiments,
the random access resource information includes the SSB index, the first cell is the non-serving cell, and a first cell index in the random access resource information is an index of the first cell in an additional cell list; or
the random access resource information includes the SSB index, the first cell is the serving cell, and a first cell index in the random access resource information indicates that the first cell is the serving cell, or the random access resource information does not include any first cell index; or
the random access resource information includes the CSI-RS resource index, and a first cell index in the random access resource information indicates that the first cell is the serving cell, or the random access resource information does not include any first cell index.

In the above embodiments, the first cell index may be flexibly configured.

In combination with some embodiments of the first aspect, in some embodiments, the method further includes:
determining a first reference signal resource corresponding to the first QCL parameter;
determining first random access resource information corresponding to the first reference signal resource; and
sending a random access preamble based on the first random access resource information.

In the above embodiments, the terminal may implicitly notify, based on a random access procedure, the network device of the first QCL parameter selected (e.g., a new QCL parameter or a target QCL parameter for switching), so that the network device and the terminal are consistent in their understanding of the first QCL parameter.

In combination with some embodiments of the first aspect, in some embodiments, the method further includes:
receiving a physical downlink control channel (PDCCH) based on the first QCL parameter.

In the above embodiments, the PDCCH may be used for an indication.

In combination with some embodiments of the first aspect, in some embodiments, the method further includes:
performing a downlink transmission and/or an uplink transmission based on the first QCL parameter.

In the above embodiments, the terminal may implicitly notify, based on the random access procedure, the network device of the first QCL parameter selected (e.g., the new QCL parameter or the target QCL parameter for switching), so that the network device may determine, via the random access resource, the first reference signal resource and the first QCL parameter corresponding to the first reference signal resource. The network device and the terminal are consistent in their understanding of the first QCL parameter, to enable rapid updating of the QCL parameter and perform the uplink and/or downlink transmission based on the new QCL parameter. This improves the beam-based transmission performance, reduces the latency and signaling overhead of beam (QCL parameter) updating, and enhances the transmission quality.

In a second aspect, embodiments of the disclosure provide a resource determination method. The method includes:
sending first information, where the first information is used to configure a reference signal resource, and the reference signal resource is configured to determine a first quasi-colocation (QCL) parameter; and
sending second information, where the second information is configured to determine random access resource information corresponding to the reference signal resource.

In the above embodiments, a network device may indicate a random access resource corresponding to the reference signal resource via the second information, to realize a flexible management of the random access resource, so that a terminal initiates a random access via the random access resource, and thus notify the network device of the reference signal resource and the QCL parameter corresponding to the reference signal resource via the random access. This realizes a rapid notification of the QCL parameter, reducing notification latency and signaling overhead.

In combination with some embodiments of the second aspect, in some embodiments, the random access resource information includes at least one of:
a synchronization signal block (SSB) index;
a channel state information reference signal (CSI-RS) resource index;
a random access channel occasion (RO);
a preamble index; or
a first cell index, configured to determine a first cell corresponding to a random access resource.

In combination with some embodiments of the second aspect, in some embodiments, configuration information of the reference signal resource includes at least one of:
a reference signal resource identifier; or
a second cell index, configured to determine a second cell corresponding to a reference signal resource identifier, where the second cell is a serving cell or a non-serving cell of a terminal.

In combination with some embodiments of the second aspect, in some embodiments, the reference signal resource is a reference signal resource corresponding to the QCL parameter, co-location Type D corresponds to a transmission configuration indication (TCI) state, and different TCI states correspond to different instances of random access resource information.

The TCI state includes at least one of a joint TCI state, a downlink TCI state, or an uplink TCI state; and
the random access resource information includes at least one of an RO or a preamble index.

In combination with some embodiments of the second aspect, in some embodiments, the second cell is the non-serving cell of the terminal,
the reference signal resource is an SSB of the second cell; or
the reference signal resource is a CSI-RS resource, and a source reference signal corresponding to the CSI-RS resource is an SSB of the second cell.

In combination with some embodiments of the second aspect, in some embodiments,
the random access resource information includes an SSB index, the SSB index in the random access resource information is an SSB index of a first cell, and the first cell is a serving cell or a non-serving cell of the terminal; or
the random access resource information includes a CSI-RS resource index, and a source reference signal corresponding to the CSI-RS resource index in the random access resource information is an SSB index of a first cell.

In combination with some embodiments of the second aspect, in some embodiments,
the random access resource information does not include any RO, an RO corresponding to the random access resources is determined based on a first mapping relationship, and the first mapping relationship is a mapping relationship between SSB indexes of the first cell and ROs; and/or
the random access resource information does not include any preamble index, a preamble index corresponding to the random access resource is determined based on a second mapping relationship, and the second mapping relationship is a mapping relationship between SSB indexes of the first cell and preamble indexes.

In combination with some embodiments of the second aspect, in some embodiments, the first cell is the non-serving cell, and the method further includes:
receiving third information, where the third information is configured to determine the first mapping relationship and/or the second mapping relationship corresponding to the non-serving cell.

In combination with some embodiments of the second aspect, in some embodiments,
the random access resource information includes the SSB index, the first cell is the non-serving cell, and a first cell index in the random access resource information is an index of the first cell in an additional cell list; or
the random access resource information includes the SSB index, the first cell is the serving cell, and a first cell index in the random access resource information indicates that the first cell is the serving cell, or the random access resource information does not include any first cell index; or
the random access resource information includes the CSI-RS resource index, and a first cell index in the random access resource information indicates that the first cell is the serving cell, or the random access resource information does not include any first cell index.

In combination with some embodiments of the second aspect, in some embodiments, the method further includes:
receiving a random access preamble, where the random access preamble is a random access preamble sent, based on first random access resource information, by a terminal, the first random access resource information is random access resource information corresponding to a first reference signal resource, and the first reference signal resource is a reference signal resource corresponding to the first QCL parameter determined by the terminal.

In combination with some embodiments of the second aspect, in some embodiments, the method further includes:
sending a physical downlink control channel (PDCCH) to the terminal based on the first QCL parameter.

In combination with some embodiments of the second aspect, in some embodiments, the method further includes:
performing a downlink transmission and/or an uplink transmission with the terminal based on the first QCL parameter.

In a third aspect, embodiments of the disclosure provide a terminal. The terminal may include at least one of a transceiver module or a processing module. The terminal may be configured to perform optional implementations of the first aspect.

In a fourth aspect, embodiments of the disclosure provide a network device. The network device may include at least one of a transceiver module or a processing module. The network device may be configured to perform optional implementations of the second aspect.

In a fifth aspect, embodiments of the disclosure provide a communication device. The communication device may include one or more processors. The communication device may be configured to perform optional implementations of the first aspect or the second aspect.

In a sixth aspect, embodiments of the disclosure provide a storage medium. The storage medium has instructions stored thereon. When the instructions run on a communication device, the communication device is caused to perform the method according to optional implementations of the first aspect or the second aspect.

In a seventh aspect, embodiments of the disclosure provide a program product. When the program product is performed by a communication device, the communication device is caused to perform the method according to optional implementations of the first aspect or the second aspect.

In an eighth aspect, embodiments of the disclosure provide a computer program. When the computer program runs on a computer, a computer is caused to perform the method according to optional implementations of the first aspect or the second aspect.

In a ninth aspect, embodiments of the disclosure provide a chip or chip system. The chip or chip system includes a processing circuit and is configured to perform the method according to optional implementations of the first aspect or the second aspect.

In a tenth aspect, embodiments of the disclosure provide a communication system. The communication system may include a terminal and a network device. The terminal is configured to perform the method according to optional implementations of the first aspect, and the network device is configured to perform the method according to optional implementations of the second aspect.

It is understandable that all of the terminal, the network device, the communication device, the communication system, the storage medium, the program product, the computer program, the chip, or the chip system may be configured to perform the method in the embodiments of the disclosure. Therefore, for beneficial effects they may achieve, reference may be made to the beneficial effects in corresponding methods, which are not repeated here.

Embodiments of the disclosure provide resource determination methods and apparatuses, and a storage medium. In some embodiments, terms such as "resource determination method", "information processing method", "communication method" may be used interchangeably. Terms such as "resource determination apparatus", "information processing apparatus", "communication apparatus", and "communication device" may be used interchangeably. Terms such as "information processing system" and "communication system" may be used interchangeably.

Embodiments of the disclosure are not exhaustive, but are only illustrative, and are not intended to be a detailed limitation on the protection scope of the disclosure. In the absence of contradiction, each step in a certain embodiment may be implemented as an independent embodiment, and each step may be arbitrarily combined. For example, a solution after removing some steps in a certain embodiment may also be implemented as an independent embodiment, and an order of the steps in a certain embodiment may be arbitrarily exchanged. In addition, alternative implementations in a certain embodiment may be arbitrarily combined. In addition, respective embodiments may be arbitrarily combined, for example, some or all steps of different embodiments may be arbitrarily combined, and a certain embodiment may be arbitrarily combined with alternative implementations of other embodiments.

In various embodiments of the disclosure, unless otherwise specified or there is a logical conflict, the terms and/or descriptions between embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In some embodiments, "a plurality of" or "multiple" may mean two or more.

In some embodiments, the terms such as "at least one of", "one or more", "a plurality of", "multiple", etc. may be used interchangeably.

In some embodiments, the terms such as "at least one of A, B", "A and/or B", "in one case, A; in another case, B", "in response to one case, A; in response to another case, B", etc. may include the following technical solutions according to situations: in some embodiments, A (A is performed independently of B); in some embodiments, B (B is performed independently of A); in some embodiments, one is selected from A and B to be executed (A and B are selectively executed); in some embodiments, A and B (both A and B are performed). When there are more branches such as A, B, C, etc., the above is applicable.

In some embodiments, the descriptions such as "A or B", etc. may include the following technical solutions according to situations: in some embodiments, A (A is performed independently of B); in some embodiments, B (B is performed independently of A); in some embodiments, one is selected from A and B to be performed (A and B are selectively performed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". As another example, if the descriptive object is "level", the ordinal number before the "level" in the "first level" and the "second level" does not limit the priority between the "levels". As another example, a number of descriptive objects is not limited by the ordinal number, and may be one or more. Taking the "first apparatus" as an example, the number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. As another example, if the descriptive object is "information", then the "first information" and the "second information" may be the same information or different information, and their contents may be the same or different.

In some embodiments, "including A", "containing A", "used to indicate/indicating A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus, etc. may be interpreted as physical or virtual, and their names are not limited to the names recorded in embodiments. The terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as a device (such as, a network device, an access network device, a core network device, etc.,) included in a network.

In some embodiments, the network device may include at least one of the access network device or the core network device.

In some embodiments, the terms such as "access network device (AN device)", "radio access network (RAN) device", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" may be used interchangeably.

In some embodiments, terms such as "terminal", "terminal device", "terminal-side device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be used interchangeably.

In some embodiments, the "access network device", the "core network device", or the "network device" may be replaced with the "terminal". For example, the structure where communication between access network devices, core network devices, or network devices and terminals is replaced with communication between multiple terminals (e.g., device-to-device (D2D), vehicle-to-everything (V2X), etc.) may also be applied to various embodiments of the disclosure. In this case, the terminal may also be configured to have all or some of the functions of the access network device. In addition, the terms such as "uplink" and "downlink" may be replaced with the terms (e.g., "sidelink") corresponding to the communication between terminals. For example, "uplink channels" or "downlink channels" may be replaced with "side channels" or "direct channels", and "uplink links" or "downlink links" may be replaced with "side links" or "direct links".

In some embodiments, the "terminal" may be replaced with the "access network device", the "core network device", or the "network device". In this case, the access network device, the core network device, or the network device may also be configured with all or some of the functions of the terminal.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

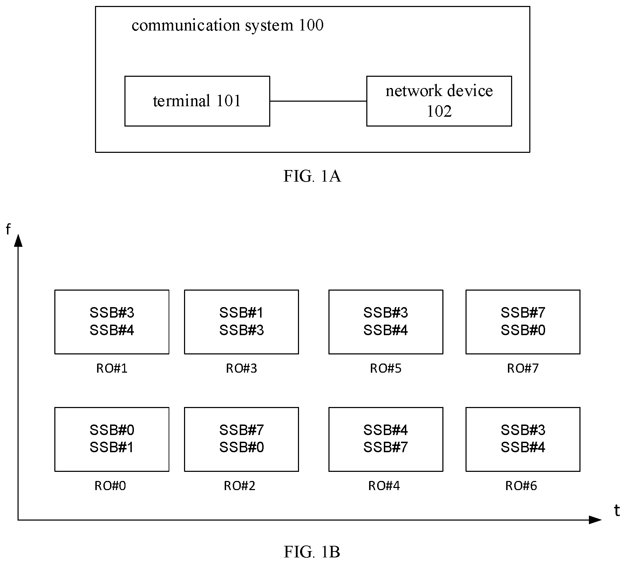

FIG. 1A is a schematic diagram of an architecture illustrating a communication system according to an embodiment of the disclosure. As illustrated in FIG. 1A, the communication system 100 may include a terminal (terminal device) 101 and a network device 102.

In some embodiments, the terminal 101 may include, but is not limited to, at least one of a mobile phone, a wearable device, an Internet of Things device, a vehicle with a communication function, a smart vehicle, in-vehicle terminal, a Pad, a computer with a wireless transceiver function, a road side unit (RSU), a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home.

In some embodiments, the network device 102 may include at least one of an access network device or a core network device.

In some embodiments, the access network device may be a node or device that connects the terminal to a wireless network. The access network device may include, but is not limited to, at least one of an evolved NodeB (eNB) in a fifth generation (5G) communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a sixth generation (6G) communication system, an Open RAN, a Cloud RAN, a base station in another communication system, or an access node in a wireless fidelity (Wi-Fi) system.

In some embodiments, the technical solution of the disclosure may be applied to an Open RAN architecture. In this case, an interface between or within access network devices involved in embodiments of the disclosure may be transformed into an internal interface of Open RAN. The processes and information interactions between these internal interfaces may be implemented via software or program.

In some embodiments, the access network device may include a central unit (CU) and a distributed unit (DU). The CU may also be referred to as a control unit. By adopting a CU-DU structure, a protocol layer of the access network device may be separated. Some of protocol layer functions are centrally controlled by the CU, while the remaining part or all of protocol layer functions are distributed in the DU, which is centrally controlled by the CU, but is not limited to this.

In some embodiments, the core network device may be a device, or may be multiple devices or device groups. The core network may include at least one of an evolved packet core (EPC), a 5G core network (5GCN), or a next generation core (NGC).

It may be understood that the communication system in the embodiments of the disclosure is for more clearly illustrating the technical solutions in the embodiments of the disclosure and does not constitute a limitation on the technical solutions in the embodiments of the disclosure. Those skilled in the art may understand that with the evolution of system architectures and the emergence of new service scenarios, the technical solutions in the embodiments of the disclosure are also applicable to similar technical problems.

The following embodiments of the disclosure may be applied to the communication system 100 or some of the subjects illustrated in FIG. 1A, but the disclosure is not limited thereto. The subjects illustrated in FIG. 1A are examples, and the communication system may include all or some of the subjects in FIG. 1A, or may include other subjects than those illustrated in FIG. 1A. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the multiple systems may also be combined (such as, a combination of LTE or LTE-A and 5G, etc.) for application.

In some embodiments of the disclosure, the terminal described above may determine a random access resource based on an SSB.

Taking a 5G network as an example, under an NR licensed spectrum, one slot may include 14 symbols, and the number of slots contained within one subframe (e.g., 1 ms) may be determined depending on the subcarrier spacing. For example, in a case that the subcarrier spacing is 15 kHz, there is 1 slot within 1 ms. In a case that the subcarrier spacing is 30 kHz, there are 2 slots within 1 ms. In a case that the subcarrier spacing is 60 kHz, there are 4 slots within 1 ms, and so on.

In the 5G network, in order to reduce always-on reference signals and thus reduce air interface overhead, the SSB is provided. The SSB may include a primary synchronization signal (PSS), a secondary synchronization signal (SSS), and a physical broadcast channel (PBCH). In an example, the SSB may occupy 4 consecutive symbols. These 4 consecutive symbols may be PSS, PBCH, SSS + PBCH (in which the middle 12 RBs are occupied by SSS, and 4 RBs on each side are occupied by PBCH, and this symbol may be simply referred to as an SSS symbol) and PBCH in sequence. Some subcarriers in the PBCH are demodulation reference signals (DMRSs).

The above symbols may also be referred to as orthogonal frequency division multiplexing (OFDM) symbols.

In some embodiments, the subcarrier spacing of the SSB may be 15 KHz, 30 KHz, 120 KHz or 240 KHz. All SSBs may be sent within 5 ms.

To support a beam transmission, each beam needs to transmit the SSB when there is a beam. The maximum number of SSBs that may be sent within 5 ms may be 4 (for a carrier frequency below 3 GHz), 8 (for a carrier frequency between 3 GHz and 6 GHz), or 64 (for a carrier frequency above 6 GHz).

In some embodiments, terms such as "beam", "beam pair", "beam width", "beam angular degree", "antenna", "antenna element", "antenna port", "antenna port group", "panel", "layer", "the number of layers", "rank", "resource", "resource set", "resource group", "quasi-colocation (QCL) Type D", "spatial setting", "spatial filter", "spatial domain filter", "spatial reception filter", "spatial transmission filter", "spatial relation info", "spatial RX parameters", "spatial Tx parameter", "transmission configuration indication (TCI) state", "transmission configuration indication (TCI) state", "transmission configuration indication (TCI) state", "joint TCI state", "downlink (DL) TCI state", "uplink (UL) TCI state", "unified TCI state", and "common TCI state", etc. may be used interchangeably.

In some embodiments, during an initial synchronization between a terminal and a network device, the terminal detects one of SSBs sent by the network device, obtains an SSB index corresponding to the SSB, and thus obtains symbol locations where the SSB is located. In this way, the terminal and the network device realize a downlink symbol synchronization.

In some embodiments, in order to realize an uplink synchronization, the terminal needs to send a random access (RA) preamble. How this random access preamble is selected and on which random access channel occasion (RO) this random access preamble is sent are determined based on an SSB received by the terminal, which SSBs are actually sent by the network device, and a set of RO locations. For example, a specific procedure is as follows.

In step 1, the terminal detects that an SSB index of an SSB received by itself is SSB#1.

In step 2, the terminal receives a message of a system information block 1 (SIB1) sent by the network device. The SIB1 may indicate which SSBs the network device actually sends.

For example, the network device may use two sets of 8 bits to indicate which SSBs were actually sent. Since the maximum number of possible SSB positions is 64, 64 SSBs may be divided into 8 groups, with positions of 8 SSBs in each group being consecutive. That is, SSB#0 to SSB#7 are a first group, SSB#8 to SSB#15 are a second group, and so on, SSB#56 to SSB#63 are an eighth group. In the two sets of 8 bits, a first set of 8 bits indicates which groups have SSB transmission. For example, in a case that the first set of 8 bits are 00000001 (with the leftmost bit as the most significant bit and the rightmost as the least significant bit), it means that only the first group has the SSB transmission. A second set of 8 bits indicate which SSB positions within these groups have the SSB transmission. For example, in a case that the second set of 8 bits are 10011011, it means that SSBs #0, #1, #3, #4, and #7 are sent in the first group.

In step 3, the terminal knows, via steps 1 and 2, that the SSB#1 received by itself is a second one of five SSBs sent by the network device.

In step 4, the terminal receives the SIB1 sent by the network device and obtains SSB-perRACH-Occasion information. This information identifies how many actual transmitted SSBs to which preambles within one RO need to be allocated.

A value of SSB-perRACH-Occasion may be any one of: {1/8, 1/4, 1/2, 1, 2, 4, 8, 16}. In a case that this parameter is 1/8, it means that one SSB occupies 8 consecutive ROs. In a case that this parameter is 8, it means that 8 consecutive SSBs that are actually sent share one RO, but use different preambles. For example, 64 preambles are divided into 8 consecutive groups, and SSBs corresponds to 8 groups of preambles respectively.

For example, the terminal may receive the SIB1 sent by the network device to obtain the number of frequency-division multiplexed (FDM) ROs, which may be one of {1, 2, 4, 8}. In a case that the number is 2, it means that there are two ROs in different frequency-domain ranges at the same time. An RO numbering is performed first in a frequency domain and then in a time domain.

FIG. 1B is a schematic diagram illustrating a mapping relationship between SSBs and random access channel occasions according to an embodiment of the disclosure. As illustrated in FIG. 1B, "f" denotes a frequency-domain coordinate, and a unit of "f" may be kHz or subcarrier; and "t" denotes a time-domain coordinate, and a unit of "t" may be symbol. For example, in a case that SSB-perRACH-Occasion is 2, the number of FDM ROs is 2, and the network device sends SSB#0, #1, #3, #4, and #7 in a first group of SSBs, a correspondence between SSBs and ROs may be illustrated in FIG. 1B. Different SSBs correspond to different ROs at different time-frequency positions. For example, RO#0 corresponds to SSB#0 and SSB#1, RO#1 corresponds to SSB#3 and SSB#4, RO#2 corresponds to SSB#7 and SSB#0, RO#3 corresponds to SSB#1 and SSB#3, and so on.

For example, the mapping relationship between SSBs and random access channel occasions (ROs) may be referred to as a first mapping relationship (or a first correspondence, a first relationship). A mapping relationship between SSBs and preambles may be referred to as a second mapping relationship (or a second correspondence, a second relationship). The terminal may determine the RO(s) corresponding to the SSB based on the first mapping relationship, and determine the preamble(s) corresponding to the SSB based on the second mapping relationship. As an example, the terminal may determine the first mapping relationship and/or the second mapping relationship based on relevant information in the SIB1 received from a serving cell (e.g., which SSB/SSBs the network device actually sends, or the SSB-perRACH-Occasion information).

Based on the above information, the terminal may know the RO(s) and the preamble(s) corresponding to the SSB detected by itself. In this way, the terminal may use the RO(s) and the preamble(s) corresponding to the SSB to initiate the random access to the network device.

In some embodiments, terms such as "random access preamble (RA preamble)" and "preamble" may be used interchangeably.

In some embodiments, the terminal may send a beam measurement report to the network device. As an example, the network device may configure reporting of the beam measurement report. For example, the terminal may be configured by the network device to perform at least one of: periodic reporting, semi-persistent reporting, or aperiodic reporting. In other words, the terminal may send the beam measurement report at a time configured by the network device.

For example, the terminal may obtain a beam measurement result by performing the beam measurement, and the beam measurement result may be a layer 1-reference signal receiving power (L1-RSRP) and/or a layer 1-signal to interference plus noise ratio (L1-SINR).

For example, the beam measurement report may include the beam measurement result.

Whether a beam quality (e.g., the L1-RSRP, L1-SINR) has changed is first known by the terminal after the measurement. In a case that a time to transmit the beam report is determined by a network, the time determined by the network device may be inappropriate. As an example, in a case that a time interval between two transmissions is too short, the beam quality has not changed, resulting in wasted resources. As another example, in a case that a time interval between two transmissions is too long, there are no resources to report a beam change, resulting in a beam update delay, or even a beam failure. Therefore, in some embodiments, the terminal may actively trigger the beam measurement report based on an event, and in a case that a condition corresponding to the event is met, the terminal may send the beam measurement report. The event may be at least one of: a trigger event configured by the network device, a trigger event specified by a protocol, or a trigger event configured by the terminal itself.

In some embodiments, in a case that the terminal actively sends the beam measurement report, it may initiate the random access. For example, the reporting of the beam measurement report initiated by the terminal may be achieved via a contention-free or contention-based RA.

In the related art, how the terminal determine the random access resource is a problem that needs to be solved.

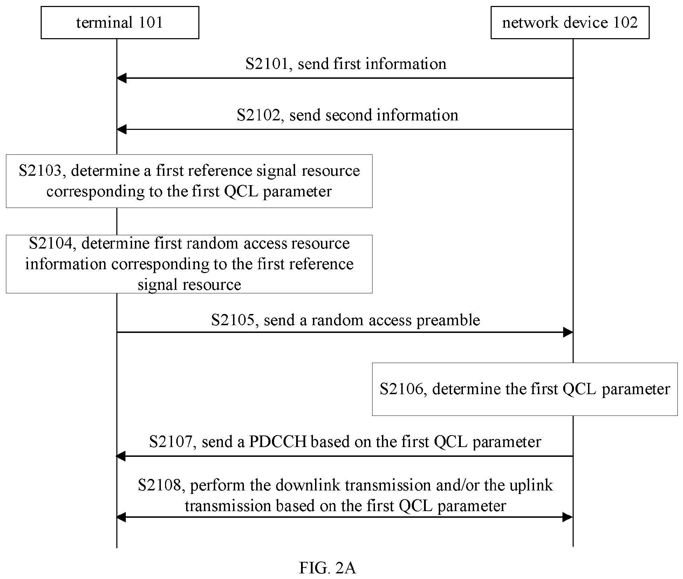

FIG. 2A is a schematic interaction diagram illustrating a resource determination method according to an embodiment of the disclosure. The method may be performed by the above communication system. As illustrated in FIG. 2A, the method may include the following.

In step S2101, a network device sends first information to a terminal.

In some embodiments, the terminal may receive the first information. For example, the terminal may receive the first information sent by the network device.

In some embodiments, the first information may be used to configure a reference signal resource, and the reference signal resource may be configured to determine a first QCL parameter. For example, the first information may include configuration information of the reference signal resource.

In some embodiments, the first QCL parameter may be a new QCL parameter. For example, in a case that the terminal currently performs a downlink transmission and/or an uplink transmission with the network device based on a second QCL parameter, the terminal may determine the new QCL parameter, as the first QCL parameter, based on the reference signal resource in the first information, and may switch to the first QCL parameter to perform the downlink transmission and/or uplink transmission. For example, the first QCL parameter and the second QCL parameter may be different or same.

In some embodiments, the name of the first information is not limited, and may be, for example, "configuration information", "configuration information of the reference signal resource", "reference signal resource information", etc.

In some embodiments, the first information may be carried in at least one of system information, a radio resource control (RRC) message, a medium access control (MAC) control element (MAC CE), downlink control information (DCI), or other messages sent by the network device to the terminal. As an example, the above system information may include a master information block (MIB) and/or an SIB. As an example, the SIB may be SIB1, SIB2, or other SIBs.

In some embodiments, the configuration information of the reference signal resource includes at least one of:
a reference signal resource identifier, where the reference signal resource identifier may be configured to indicate at least one reference signal resource; or
a second cell index, configured to determine a second cell corresponding to a reference signal resource identifier, where the second cell may be a serving cell or a non-serving cell of the terminal.

In some embodiments, the second cell is the non-serving cell, and the second cell index is a cell index of the second cell in an additional cell list. The additional cell list may be configured with a plurality of additional cells on one component carrier (CC). The additional cell list may include at least one of the following for each additional cell: a physical cell identifier (PCI) of the additional cell, a cell index of the additional cell in the list, an SSB transmit power, an SSB measurement time, an SSB period, an SSB position (ssb-PositionsInBurst), etc. The SSB position may be configured to indicate which SSBs out of the maximum number (N) of SSBs in one burst have actually been sent, to which N-bit indication information corresponds, with each bit corresponding to a respective SSB. A value of 1 for a bit indicates that an SSB at that position may be sent. Only SSBs that may be sent need to be listened to, and only then there may be corresponding RO(s) and preamble resource(s).

For example, the additional cell list may also be referred to as an additional PCI list.

In some embodiments, the name of the non-serving cell is not limited, and may be, for example, "additional cell", "neighboring cell", etc.

In some embodiments, the name of the cell index is not limited, and may be, for example, "cell identifier (ID)", "additional cell index", "non-serving cell index", "serving cell index", "additional cell ID", "non-serving cell ID", "serving cell ID", etc. For example, the second cell index may also be referred to as second cell ID.

In some embodiments, the above reference signal resource is an SSB of the second cell.

In other embodiments, the above reference signal resource is a CSI-RS resource, and a source reference signal corresponding to the CSI-RS resource is the SSB of the second cell. The source reference signal may be a source reference signal corresponding to a QCL Type D parameter.

In this way, the terminal may perform the beam measurement based on different types of reference signal resources.

In some embodiments, the terminal performs the beam measurement based on the reference signal resource, obtains L1-RSRP or L1-SINR corresponding to each reference signal resource, and informs the network device of the beam measurement result. The beam measurement result includes the reference signal resource identifier, or includes the reference signal resource identifier and the corresponding L1-RSRP or L1-SINR. Based on the reference signal resource identifier from the terminal, the network device determines a quasi-colocation parameter corresponding to a reference signal resource corresponding to the reference signal resource identifier as a new quasi-colocation parameter. The quasi-colocation parameter includes Type A, Type B, Type C, and Type D. "Type D" may be interchanged with "beam". Type A, Type B, and Type C may correspond to at least one of: average delay, delay spread, Doppler shift, or Doppler spread.

In step S2102, the network device sends second information to the terminal.

In some embodiments, the terminal may receive the second information. For example, the terminal may receive the second information sent by the network device.

In some embodiments, the second information may be configured to determine random access resource information corresponding to the reference signal resource.

In some embodiments, the name of the second information is not limited, and may be, for example, "configuration information of the random access resource", "indication information of the random access resource", "resource correspondence information", "resource mapping relationship information", "mapping relationship information between reference signal resources and random access resources", etc.

In some embodiments, the second information may be carried in at least one of system information, an RRC message, MAC CE, DCI, or other messages sent by the network device to the terminal. As an example, the second information may be carried via the RRC message.

In some embodiments, the first information and the second information described above may be carried in two separate messages. As an example, the network device may send an RRC message carrying the first information and another RRC message carrying the second information to the terminal. As another example, the network device may send the first information to the terminal via the RRC message and the second information to the terminal via the system information (such as the SIB).

In some embodiments, the first information and the second information described above may be carried in the same message. As an example, the network device may send one RRC message to the terminal, and the RRC message carries both the first information and the second information.

In some embodiments, the terminal may determine a random access resource corresponding to the reference signal resource based on the second information, and initiate a random access based on the random access resource. The network device may determine the reference signal resource corresponding to the random access resource (e.g., the RO or the Preamble) with which the terminal initiates the random access and determines a first QCL parameter corresponding to the reference signal resource, where the first QCL parameter may be a new QCL parameter determined by the terminal based on the beam measurement result.

In this way, the terminal may implicitly notify the network device of the reference signal resource corresponding to the first QCL parameter (i.e., the new QCL parameter), so that the network device and the terminal are consistent in their understanding of the new QCL parameter, and thus perform the uplink and/or downlink transmission based on the new QCL parameter.

In some embodiments, the random access resource information described above may include at least one of:
an SSB index, where the SSB index may be configured to indicate at least one SSB;
a CSI-RS resource index, where the CSI-RS resource index may be configured to indicate at least one CSI-RS resource;
an RO, where the RO may be configured to indicate an RO that the terminal may use.
a preamble index, where the preamble index may be configured to indicate a preamble that the terminal may use; or
a first cell index, where the first cell index is configured to determine a first cell corresponding to the random access resource, and the first cell may be the serving cell or the non-serving cell.

For example, the first cell index may exist only when the random access resource information includes the SSB index, and the first cell index is not included when the random access resource includes the CSI-RS resource index.

In some embodiments, the random access resource information may include the SSB index, and the SSB index in the random access resource information is the SSB index of the first cell, and the first cell is the serving cell or the non-serving cell of the terminal.

In other embodiments, the random access resource information may include the CSI-RS resource index, and a source reference signal corresponding to the CSI-RS resource index in the random access resource information is an SSB indicated by the SSB index of the first cell. The source reference signal may be a source reference signal (source RS) corresponding to the QCL Type D. That is, the terminal may receive a CSI-RS with the CSI-RS resource based on the same QCL Type D parameter as the source reference signal (i.e., the SSB).

In this way, the terminal may determine an SSB of the first cell based on the SSB index or CSI-RS resource index of the random access resource information, determine an RO and a preamble corresponding to the SSB, and initiate the random access based on the RO and the preamble.

In some embodiments, the random access resource information may include at least one of the RO or the preamble index, or neither the RO nor the preamble index is included in the random access resource information.

In one implementation, in a case that the random access resource information includes the RO, the terminal may determine the RO of the random access resource based on the RO.

In another implementation, in a case that the random access resource information does not include any RO, the RO may be determined based on a first mapping relationship, and the first mapping relationship is a mapping relationship between SSB indexes of the first cell and ROs. For example, the terminal may determine the RO corresponding to the SSB as the RO of the random access resource based on the first mapping relationship and the SSB index. The SSB index may be an SSB index in the random access resource information, and may also be a source reference signal (i.e., SSB) index corresponding to QCL Type D corresponding to the CSI-RS resource index in the random access resource information.

In one implementation, in a case that the random access resource information includes the preamble index, the terminal may determine the preamble indicated by the preamble index of the random access resource based on the preamble index.

In another implementation, in a case that the random access resource information does not include any preamble index, a preamble index may be determined based on a second mapping relationship, and the second mapping relationship is a mapping relationship between SSB indexes of the first cell and preamble indexes. For example, the terminal may determine the preamble index corresponding to the SSB as the preamble index of the random access resource based on the second mapping relationship and the SSB index. The SSB index may be an SSB index in the random access resource information, and may also be a source reference signal (i.e., SSB) index corresponding to QCL Type D corresponding to the CSI-RS resource index in the random access resource information.

Thus, under any combination of the above instances of random access resource information, the terminal may determine the RO and preamble for the random access, and initiate the random access based on the RO and the preamble.

In some embodiments, the first cell is the serving cell of the terminal. The terminal may determine the first mapping relationship and/or the second mapping relationship based on relevant information in SIB1 received from the serving cell (e.g., which SSB/SSBs the network device actually sends, SSB-perRACH-Occasion information, etc.), and determine the RO corresponding to the SSB based on the first mapping relationship and the preamble corresponding to the SSB based on the second mapping relationship. For specific implementations, reference may be made to the description in the foregoing embodiments of the disclosure, which are not repeated here.

In other embodiments, the first cell is the non-serving cell of the terminal, and the terminal may receive third information, and determine the first mapping relationship and/or the second mapping relationship corresponding to the first cell based on the third information.

This third information may be configured to determine the first mapping relationship and/or the second mapping relationship corresponding to the non-serving cell. For example, the third information may include a cell index (or PCI) of the non-serving cell, and parameters configured to determine the first mapping relationship and/or the second mapping relationship in the SIB1 of the non-serving cell. For example, the parameters may include which SSBs a neighboring cell actually sends, SSB-perRACH-Occasion information, etc. For specific implementations, reference may be made to the parameter description of the first mapping relationship and/or the second mapping relationship in the serving cell in the foregoing embodiments of the disclosure, which are not repeated here.

Thus, in a case that the first cell corresponding to the random access resource is the non-serving cell of the terminal, the first mapping relationship and/or the second mapping relationship of the non-serving cell may be obtained via the third information.

For example, the third information may be information sent separately by the network device to the terminal, or may be information sent to the terminal together with the second information.

In some embodiments, the third information may be carried in at least one of system information, an RRC message, MAC CE, DCI, or other messages sent by the network device to the terminal.

In some embodiments, the third information and the second information may be carried in two separate messages, and may also carried in the same message.

In some embodiments, the first cell index in the random access resource information described above may be implemented in various different ways.

In one implementation, the random access resource information includes the SSB index, and the first cell is the non-serving cell. The first cell index in the random access resource information may be an index of the first cell in the additional cell list.

In another implementation, the random access resource information includes the SSB index, and the first cell is the serving cell, and the first cell index in the random access resource information may be configured to indicate that the first cell is the serving cell. Or the random access resource information may not include the first cell index, and the first cell is a serving cell by default.

In yet another implementation, the random access resource information includes the CSI-RS index, and the first cell index in the random access resource information may be configured to indicate that the first cell is the serving cell. Or the random access resource information may not include the first cell index, and the first cell is a serving cell by default.

In this way, the terminal may determine the first cell corresponding to the random access resource based on an absence or a presence of the first cell index or a value of the first cell index in the random access resource information.

In some embodiments, the random access resource information described above may include the SSB index. As an example, the random access resource information may include only the SSB index, or the random access resource information may include the SSB index and at least one of the RO, the preamble index, or the first cell index.

In one implementation, the random access resource information may include the SSB index and the preamble index.

For example, in a case that the terminal determines that a QCL parameter corresponding to the first reference signal resource is a new QCL parameter (e.g., the first QCL parameter) and needs to notify the network device of information corresponding to the new QCL parameter, the terminal may determine the SSB index and the preamble index in the random access resource information corresponding to the first reference signal resource based on the second information, determine, based on the SSB index, RO(s) (there may be one or more ROs, and one RO corresponds to one time-frequency resource) corresponding to the SSB index, and determine the preamble based on the preamble index. In this way, the terminal may send a corresponding preamble with the time-frequency resource corresponding to the RO. As an example, after receiving the corresponding preamble with a corresponding time-frequency resource, the network device may determine the first reference signal resource based on the RO and the preamble, and determine the QCL parameter corresponding to the first reference signal resource as the new QCL parameter, which is the new QCL parameter that the terminal needs to notify the network device of.

As an example, in this implementation, the random access resource information may not include any first cell index, and the SSB index corresponds to an SSB of the serving cell by default.

In another implementation, the random access resource information may include the SSB index, the preamble index, and the first cell index.

For example, the first cell index may be configured to indicate the index of the first cell in the additional cell list, that is, to indicate a cell index of a non-serving cell in the additional cell list. The additional cell list may be configured to include indexes of the plurality of additional cells on one CC. For example, the additional cell list may include at least one of the following for each additional cell: the PCI of the additional cell, the cell index of the additional cell in the list, the SSB transmit power, the SSB measurement time, the SSB period, the SSB position, etc. For example, the additional cell list may also be referred to as additional PCI list.

In another implementation, the random access resource information may include the SSB index, the RO, and the preamble index.

For example, in a case that the terminal determines that the QCL parameter corresponding to the first reference signal resource is the new QCL parameter and needs to notify the network device of the information of the new QCL parameter, the terminal may determine, based on the second information, the SSB index, the RO, and the preamble index in the random access resource information corresponding to the first reference signal resource, determine an RO used by the terminal for the random access based on RO(s) (there may be one or more ROs, and one RO corresponds to one time-frequency resource) notified by the second information, and determine the preamble based on the preamble index. In this way, the terminal may send the corresponding preamble with the time-frequency resource corresponding to the RO. For example, after receiving the corresponding preamble with the corresponding time-frequency resource, the network device may determine the first reference signal resource based on the RO and the preamble, and determine the QCL parameter corresponding to the first reference signal resource as the new QCL parameter, which is the new QCL parameter that the terminal needs to notify the network device of.

Thus, in a case that the random access information includes the SSB index, the terminal may determine the RO and the preamble of the random access resource and initiate the random access based on the RO and the preamble.

In other embodiments, the random access resource information may include the CSI-RS resource index. For example, the random access resource may include only the CSI-RS resource index, or the random access resource may include the CSI-RS resource index and at least one of the RO, the preamble index, or the first cell index.

In an implementation, the random access resource information may include the CSI-RS resource index, the RO, and the preamble index.

For example, in a case that the terminal determines that the QCL parameter corresponding to the first reference signal resource is the new QCL parameter and needs to notify the network device of the information of the new QCL parameter, the terminal may determine the CSI-RS resource index, the RO, and the preamble index in the random access resource information corresponding to the first reference signal resource based on the second information, determine the RO used by the terminal for the random access based on RO(s) (there may be one or more ROs, and one RO corresponds to one time-frequency resource) notified by the second information, and determine the preamble based on the preamble index. In this way, the terminal may send the corresponding preamble with the time-frequency resource corresponding to the RO. For example, after receiving the corresponding preamble with the corresponding time-frequency resource, the network device may determine the first reference signal resource based on the RO and the preamble, and determine the QCL parameter corresponding to the first reference signal resource as the new QCL parameter, which is the new QCL parameter that the terminal needs to notify the network device of.

For example, in a case that the random access resource information does not include any RO, that is, no RO is configured in the rando access resource information, the terminal may determine that a source reference signal (e.g., a source reference signal of QCL Type D) corresponding to the CSI-RS resource index is the SSB of the first cell, and determine the RO corresponding to the SSB as an RO corresponding to the first reference signal resource based on the first mapping relationship.

For example, in a case that the random access resource information does not include any preamble index, that is, no preamble index is configured in the rando access resource information, the terminal may determine that the source reference signal (e.g., the source reference signal of QCL Type D) corresponding to the CSI-RS resource index is the SSB of the first cell, and determine, based on the second mapping relationship, the preamble corresponding to the SSB as a preamble corresponding to the first reference signal resource.

In one implementation, in a case that the random access resource information includes the CSI-RS resource index, the first cell may be a serving cell by default, and the random access resource information may not include any first cell index.

Thus, in a case that the random access information includes the CSI-RS resource index, the terminal may determine the RO and the preamble of the random access resource, and initiate the random access based on the RO and the preamble.

In some embodiments of the disclosure, the above reference signal resource is the SSB, which is associated with the non-serving cell, that is, the second cell corresponding to the above reference signal resource is the non-serving cell. The random access resource information corresponding to the reference signal resource indicated by the second information may include at least one of the following.

In example 1, the random access resource information includes the SSB index, which may be an SSB index of the serving cell, i.e., the first cell index is not included in the rando access resource information or the first cell index is configured to indicate the serving cell. As an example, the random access resource information may further include at least one of the RO or the preamble index, or neither the RO nor the preamble index may be included in the random access resource information. In a case that no RO is included, the RO may be determined based on the first mapping relationship between SSBs of the serving cell and ROs. In a case that no preamble index is included, the preamble may be determined based on the second mapping relationship between SSBs of the serving cell and preambles.

In example 2, the random access resource information includes the SSB index, which may be an SSB index of the non-serving cell, i.e., the first cell index is a cell index of the non-serving cell. For example, the random access resource information may further include at least one of the RO or the preamble index, or neither the RO nor the preamble index is included in the random access resource information. In a case that no RO is included, the RO may be determined based on the first mapping relationship between SSBs of the non-serving cell and ROs. In a case that no preamble index is included, the preamble may be determined based on the second mapping relationship between SSBs of the non-serving cell and preambles.

In example 3, the random access resource information includes the CSI-RS resource index. The source reference signal (e.g., the source reference signal of QCL Type D) corresponding to the CSI-RS resource index is the SSB of the serving cell. The first cell index may not be included or the first cell index may be configured to indicate the serving cell. For example, the random access resource information may further include at least one of the RO or the preamble index, or neither the RO nor the preamble index is included in the random access resource information. In a case that no RO is included, the RO may be determined based on the first mapping relationship between SSBs of the serving cell and ROs. In a case that no preamble index is included, the preamble may be determined based on the second mapping relationship between SSBs of the serving cell and preambles.

In example 4, the random access resource information includes the CSI-RS resource index, and the source reference signal corresponding to the CSI-RS resource index is the SSB of the non-serving cell. The first cell index may not be included or may not be configured to indicate the serving cell. For example, the random access resource information may further include at least one of the RO or the preamble index, or neither the RO nor the preamble index is included in the random access resource information. In a case that no RO is included, the RO may be determined based on the first mapping relationship between SSBs of the non-serving cell and ROs. In a case that no preamble index is included, the preamble may also be determined based on the second mapping relationship between SSBs of the non-serving cell and preambles.

In some embodiments of the disclosure, the above reference signal resource is the CSI-RS resource, and the source reference signal (e.g., the source reference signal of QCL Type D) corresponding to the CSI-RS resource is the SSB of the non-serving cell, that is, the second cell corresponding to the above reference signal resource is the non-serving cell. In this case, the random access resource information corresponding to the reference signal resource indicated by the second information may also include at least one of the above examples 1 to 4.

In some embodiments of the disclosure, the above reference signal resource is the SSB, which is associated with the serving cell, that is, the second cell corresponding to the above reference signal resource is the serving cell. In this case, the random access resource information corresponding to the reference signal resource indicated by the second information may also include at least one of the above examples 1 to 4.

In some embodiments of the disclosure, the above reference signal resource is the CSI-RS resource, and the source reference signal (e.g., the source reference signal of QCL Type D) corresponding to the CSI-RS resource is the SSB of the serving cell, that is, the second cell corresponding to the above reference signal resource is the serving cell. In this case, the random access resource information corresponding to the reference signal resource indicated by the second information may also include at least one of the above examples 1 to 4.

Thus, in the above different scenarios, the terminal may determine the random access resource corresponding to the reference signal resource based on the second information, and the network device may also determine the reference signal resource based on the random access resource and determine the first QCL parameter corresponding to the reference signal resource. This enables the terminal to indicate the new QCL parameter selected to the network device based on the random access procedure, enabling rapid updating of the QCL parameter, improving the beam-based transmission performance, and reducing the beam (QCL parameter) update latency and signaling overhead.

In some embodiments of the disclosure, new QCL parameters may also be distinguished for different TCI states via different random access resources.

For example, the above reference signal resource may be a reference signal resource corresponding to the QCL Type D, and the QCL Type D may correspond to a TCI state. Different TCI states correspond to different instances of random access resources information.

In this way, the terminal may determine the random access resource based on the TCI state, and initiate the random access based on the random access resource, thereby implicitly informing the network device of a TCI state to which the new QCL parameter applies. The network device may determine the TCI state based on the random access resource (such as the RO and/or the preamble) on which the terminal initiates the random access.

For example, the TCI state may include at least one of a joint TCI state, a downlink TCI state, or an uplink TCI state. The joint TCI state may be a TCI state used for uplink and downlink transmission, the downlink TCI state may be a TCI state used for a downlink transmission, and the uplink TCI state may be a TCI state used for an uplink transmission.

For example, the random access resource information may include at least one of the RO or the preamble index.

In some embodiments, the QCL Type D may also be referred to as QCL Type D assumption or QCL Type D parameter.

In some embodiments, in a case that the reference signal resource configured to determine the new QCL parameter is determined by the terminal to be a reference signal resource for the QCL parameter corresponding to the joint TCI state, or a reference signal resource for the QCL parameter corresponding to the downlink TCI state, or a reference signal resource for the QCL parameter corresponding to the uplink TCI state, at least one of the RO or the preamble of its corresponding random access resource is configured independently, that is, configured to be different across different cases. In this way, the network device may determine, based on different random access resources, that the terminal wants to determine a new QCL parameter corresponding to the reference signal resource corresponding to the random access resource as the new joint TCI state, the new downlink TCI state, or the new uplink TCI state. For example, in a case that the random access resource corresponds to a random access resource corresponding to the DL TCI state, the network device only updates a QCL parameter corresponding to the DL TCI state, and does not need to update a QCL parameter corresponding to the UL TCI state.

In step S2103, the terminal determines a first reference signal resource corresponding to the first QCL parameter.

In some embodiments, the first QCL parameter may be a target QCL parameter that the terminal is preparing to switch to.

In some embodiments, the terminal may determine the first reference signal resource corresponding to the first QCL parameter based on the beam measurement result. For example, a reference signal resource with a best beam measurement result among a plurality of reference signal resources may be used as the first reference signal resource, which is a reference signal resource corresponding to the first QCL parameter. As an example, the best beam measurement result may be maximum L1-RSRP or maximum L1-SINR.

In step S2104, the terminal determines first random access resource information corresponding to the first reference signal resource.

In some embodiments, the terminal may determine the first random access resource (e.g., at least one of the RO, the random access preamble, or the first cell index) corresponding to the first reference signal resource based on the second information described above. As an example, for specific implementations of determining, by the terminal, the random access resource corresponding to the reference signal resource based on the second information, reference may be made to the description in step S2102, which are not repeated here.

In step S2105, the terminal sends a random access preamble to the network device.

In some embodiments, the network device may receive the random access preamble. For example, the network device may receive the random access preamble sent by the terminal.

As an example, the terminal may determine the first cell based on the first random access resource information and send the random access preamble to a network device (base station) to which the first cell belongs, that is, the terminal initiates the random access in the first cell.

As an example, a network device in step S2105 and thereafter and the network device in step S2102 and therebefore may be the same network device, or may be different network devices. As an example, in a case that the first cell is the non-serving cell, and the non-serving cell and the serving cell belong to different network devices, the network device in step S2105 and thereafter may be different from the network device in step S2102 and therebefore. As another example, in a case that the first cell is the serving cell, the network device in step S2105 and thereafter may be the same as the network device in step S2102 and therebefore. As yet another example, in a case that the first cell is the non-serving cell and the non-serving cell and the serving cell belong to the same network device, the network device in step S2105 and thereafter may also be the same as the network device in step S2102 and therebefore.

In some embodiments, the terminal sends the random access preamble to the network device based on the first random access resource information. For example, the terminal may send the random access preamble on the RO determined.

In this way, the terminal may implicitly notify, based on the random access procedure, the network device of the first QCL parameter selected (such as the new QCL parameter or a target QCL parameter for switching), so that the network device and the terminal are consistent in their understanding of the first QCL parameter.

In step S2106, the network device determines the first QCL parameter.

In some embodiments, the network device may determine the first reference signal resource based on the random access preamble received and/or an RO of the random access preamble received, and determine the first QCL parameter corresponding to the first reference signal resource. The first QCL parameter may be the new QCL parameter determined by the terminal based on the beam measurement result.

In step S2107, the network device sends a PDCCH to the terminal based on the first QCL parameter.

In some embodiments, the terminal may receive the PDCCH. For example, the terminal may receive, based on the first QCL parameter, the PDCCH sent by the network device.

In some embodiments, the PDCCH may be configured to instruct the terminal to perform the downlink transmission and/or the uplink transmission based on the first QCL parameter.

In some embodiments, the terminal may receive the PDCCH within a dedicated search space.

In step S2108, the network device and the terminal perform the downlink transmission and/or the uplink transmission based on the first QCL parameter.

In some embodiments, the terminal may, after a first time when the PDCCH is received, perform the downlink transmission and/or the uplink transmission with the network device based on the first QCL parameter. The "first time" may be a time specified by a protocol, or a time that is configured by the network device and sent to the terminal.

In some embodiments, the network device may also, after a first time when the PDCCH is sent, perform the downlink transmission and/or the uplink transmission with the terminal based on the first QCL parameter.

In some embodiments, the downlink transmission may include at least one of: the PDCCH, a physical downlink shared channel (PDSCH), or a CSI-RS (based on the joint TCI state or the DL TCI state).

In some embodiments, the uplink transmission may include at least one of: a physical uplink control channel (PUCCH), a physical uplink shared channel (PUSCH), or a sounding reference signal (SRS) (based on the joint TCI state or the UL TCI state).

In this way, the terminal may implicitly notify, through the random access procedure, the network device of the first QCL parameter selected (e.g., the new QCL parameter or the target QCL parameter for switching), so that the network device determines the first reference signal resource and the first QCL parameter corresponding the first reference signal resource based on the random access resource. The network device and the terminal are consistent in their understanding of the first QCL parameter, thereby enabling rapid updating of the QCL parameter, performing the uplink transmission and/or the downlink transmission based on the new QCL parameter, improving the beam-based transmission performance, reducing the beam (QCL parameter) update latency and signaling overhead, and enhancing the transmission quality.

The methods according to embodiments of the disclosure may include at least one of the steps S2101 to S2108. For example, step S2102 may be implemented as an independent embodiment, step S2101 may be implemented as an independent embodiment, steps S2101 + S2102 may be implemented as an independent embodiment, steps S2101 + S2102 + S2105 may be implemented as an independent embodiment, steps S2101 + S2102 + S2105 + S2106 may be implemented as an independent embodiment, steps S2101 + S2102 + S2103 + S2104 + S2105 may be implemented as an independent embodiment, steps S2101 + S2102 + S2103 + S2104 + S2105 + S2107 + S2108 may be implemented as an independent embodiment, and steps S2101 + S2102 + S2105 + S2106 + S2107 + S2108 may be implemented as an independent embodiment, but the disclosure is not limited thereto.

In some embodiments, steps S2101 to S2108 may be executed in an exchanged order or simultaneously.

In some embodiments, steps S2101 to S2108 are all optional steps.

In some embodiments, reference may be made to other optional implementations described before or after the description corresponding to FIG. 2A.

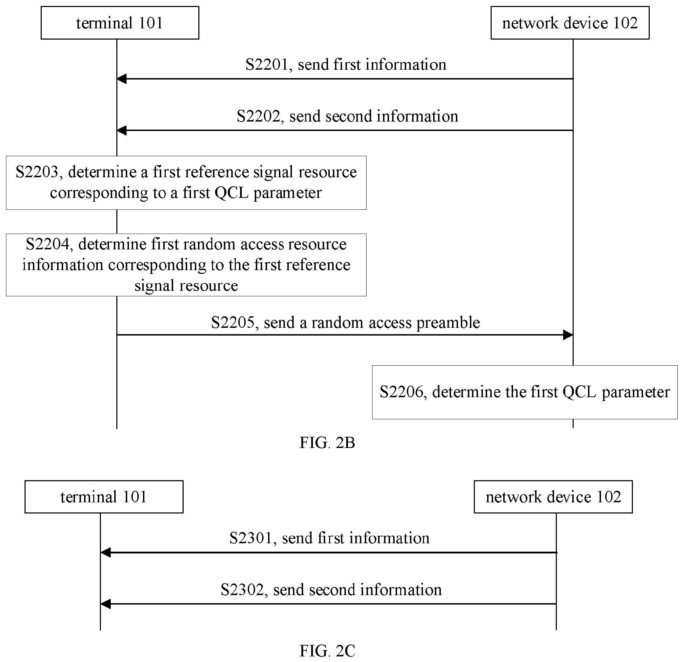

FIG. 2B is a schematic interaction diagram illustrating a resource determination method according to an embodiment of the disclosure. As illustrated in FIG. 2B, embodiments of the disclosure relate to the resource determination method, which may be performed by a communication system. The method may include the following.

In step S2201, a network device sends first information to a terminal.

For an optional implementation of step S2201, reference may be made to the optional implementation of step S2101 in FIG. 2A, and other related parts in the embodiments involved in FIG. 2A, which are not repeated here.

In step S2202, the network device sends second information to the terminal.

For an optional implementation of step S2202, reference may be made to the optional implementation of step S2102 in FIG. 2A, and other related parts in the embodiments involved in FIG. 2A, which are not repeated here.

In step S2203, the terminal determines a first reference signal resource corresponding to a first QCL parameter.

For an optional implementation of step S2203, reference may be made to the optional implementation of step S2103 in FIG. 2A, and other related parts in the embodiments involved in FIG. 2A, which are not repeated here.

In step S2204, the terminal determines first random access resource information corresponding to the first reference signal resource.

For an optional implementation of step S2204, reference may be made to the optional implementation of step S2104 in FIG. 2A, and other related parts in the embodiments involved in FIG. 2A, which are not repeated here.

In step S2205, the terminal sends a random access preamble to the network device.

For an optional implementation of step S2205, reference may be made to the optional implementation of step S2105 in FIG. 2A, and other related parts in the embodiments involved in FIG. 2A, which are not repeated here.

In step S2206, the network device determines the first QCL parameter.

For an optional implementation of step S2206, reference may be made to the optional implementation of step S2106 in FIG. 2A, and other related parts in the embodiments involved in FIG. 2A, which are not repeated here.

In some embodiments, the above steps are all optional.

In some embodiments, embodiments illustrated in FIG. 2B may also be combined with any one or more steps in embodiments shown in FIG. 2A as a new embodiment.

FIG. 2C is a schematic interaction diagram illustrating a resource determination method according to an embodiment of the disclosure. As illustrated in FIG. 2C, embodiments of the disclosure relate to the resource determination method, which may be performed by a communication system. The method may include the following.

In step S2301, a network device sends first information to a terminal.

For an optional implementation of step S2301, reference may be made to the optional implementation of step S2101 in FIG. 2A, and other related parts in the embodiments involved in FIG. 2A, which are not repeated here.

In step S2302, the network device sends second information to the terminal.

For an optional implementation of step S2302, reference may be made to the optional implementation of step S2102 in FIG. 2A, and other related parts in the embodiments involved in FIG. 2A, which are not repeated here.

In some embodiments, the above steps are all optional.

In some embodiments, embodiments illustrated in FIG. 2C may also be combined with any one or more steps in embodiments illustrated in FIG. 2A as a new embodiment.

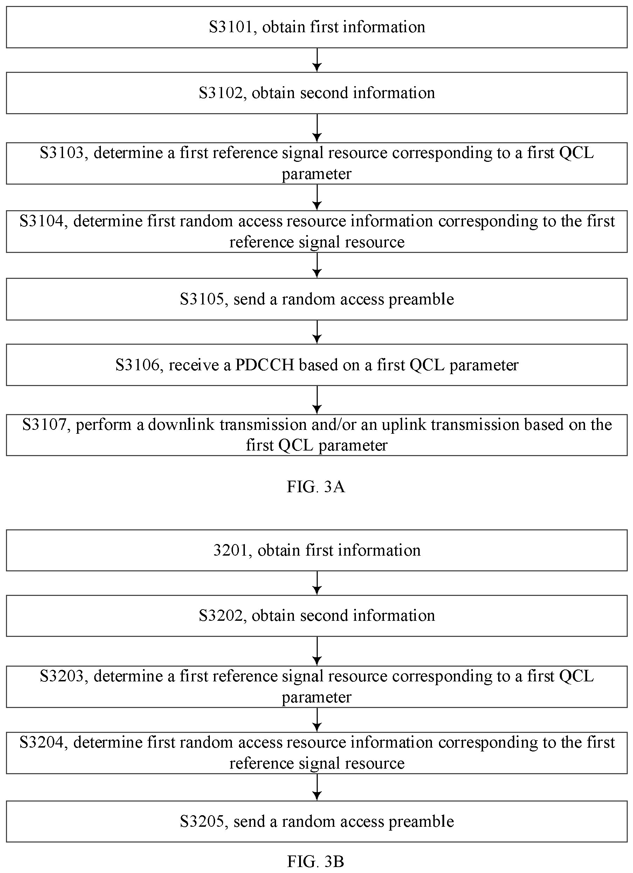

FIG. 3A is a flowchart illustrating a resource determination method according to an embodiment of the disclosure. As illustrated in FIG. 3A, embodiments of the disclosure relate to the resource determination method, which may be performed by a terminal. The method may include the following.

In S3101, first information is obtained.

For an optional implementation of step S3101, reference may be made to the optional implementation of step S2101 in FIG. 2A and other related parts in the embodiments involved in FIG. 2A, which are not repeated here.

In some embodiments, the terminal may receive the first information sent by the network device or other entities, but the disclosure is not limited thereto.

In some embodiments, the terminal may obtain the first information specified by a protocol.

In some embodiments, the terminal may obtain the first information from one or more upper/higher layers.

In some embodiments, the terminal may perform processing to obtain the first information.

In some embodiments, step S3101 may be omitted, and the terminal may autonomously implement a function indicated by the first information, or the above function is set by default.

In step S3102, second information is obtained.

For an optional implementation of step S3102, reference may be made to the optional implementation of step S2102 in FIG. 2A and other related parts in the embodiments involved in FIG. 2A, which are not repeated here.

In some embodiments, the terminal may receive the second information sent by the network device or other entities, but the disclosure is not limited thereto.

In some embodiments, the terminal may obtain the second information specified by a protocol.

In some embodiments, the terminal may obtain the second information from one or more upper/higher layers.

In some embodiments, the terminal may perform processing to obtain the second information.

In some embodiments, step S3102 may be omitted, and the terminal may autonomously implement a function indicated by the second information, or the above function is set by default.

In step S3103, a first reference signal resource corresponding to a first QCL parameter is determined.

For an optional implementation of step S3103, reference may be made to the optional implementation of step S2103 in FIG. 2A and other related parts in the embodiments involved in FIG. 2A, which are not repeated here.

In step S3104, first random access resource information corresponding to the first reference signal resource is determined.

For an optional implementation of step S3104, reference may be made to the optional implementation of step S2104 in FIG. 2A and other related parts in the embodiments involved in FIG. 2A, which are not repeated here.

In step S3105, a random access preamble is sent.

For an optional implementation of step S3105, reference may be made to the optional implementation of step S2105 in FIG. 2A and other related parts in the embodiments involved in FIG. 2A, which are not repeated here.

In some embodiments, the terminal may send the random access preamble to the network device or other entities, but the disclosure is not limited thereto.

In step S3106, a PDCCH is received based on a first QCL parameter.

For an optional implementation of step S3106, reference may be made to the optional implementation of step S2107 in FIG. 2A, and other related parts in the embodiments involved in FIG. 2A, which are not repeated here.

In step S3107, a downlink transmission and/or an uplink transmission is performed based on the first QCL parameter.

For an optional implementation of step S3107, reference may be made to the optional implementation of step S2108 in FIG. 2A, and other related parts in the embodiments involved in FIG. 2A, which are not repeated here.

The methods according to embodiments of the disclosure may include at least one of the steps S3101 to S3107. For example, step S3102 may be implemented as an independent embodiment, step S3101 may be implemented as an independent embodiment, steps S3101 + S3102 may be implemented as an independent embodiment, steps S3101 + S3102 + S3105 may be implemented as an independent embodiment, steps S3101 + S3102 + S3103 + S3104 + S3105 may be implemented as an independent embodiment, and steps S3101 + S3102 + S3105 + S3106 + S3107 may be implemented as an independent embodiment, but the disclosure is not limited thereto.

In some embodiments, steps S3101 to S3107 may be executed in an exchanged order or simultaneously.

In some embodiments, steps S3101 to S3107 are all optional.

FIG. 3B is a flowchart illustrating a resource determination method according to an embodiment of the disclosure. As illustrated in FIG. 3B, embodiments of the disclosure relate to the resource determination method, which may be performed by a terminal. The method may include the following.

In step 3201, first information is obtained.

For an optional implementation of step S3201, reference may be made to the optional implementations of steps S2101 in FIG. 2A, and S3101 in FIG. 3A, and other related parts in the embodiments involved in FIG. 2A and FIG. 3A, which are not repeated here.

In step S3202, second information is obtained.

For an optional implementation of step S3202, reference may be made to the optional implementations of steps S2102 in FIG. 2A and S3102 in FIG. 3A, and other related parts in the embodiments involved in FIG. 2A and FIG. 3A, which are not repeated here.

In step S3203, a first reference signal resource corresponding to a first QCL parameter is determined.

For an optional implementation of step S3203, reference may be made to the optional implementations of steps S2103 in FIG. 2A, and S3103 in FIG. 3A, and other related parts in the embodiments involved in FIG. 2A and FIG. 3A, which are not repeated here.

In step S3204, first random access resource information corresponding to the first reference signal resource is determined.

For an optional implementation of step S3204, reference may be made to the optional implementations of steps S2104 in FIG. 2A, and S3104 in FIG. 3A, and other related parts in the embodiments involved in FIG. 2A and FIG. 3A, which are not repeated here.

In step S3205, a random access preamble is sent.

For an optional implementation of step S3205, reference may be made to the optional implementations of steps S2105 in FIG. 2A, and S3105 in FIG. 3A, and other related parts in the embodiments involved in FIG. 2A and FIG. 3A, which are not repeated here.

In some embodiments, the above steps are all optional.

In some embodiments, embodiments illustrated in FIG. 3B may also be combined with any one or more steps in embodiments illustrated in FIG. 3A as a new embodiment.

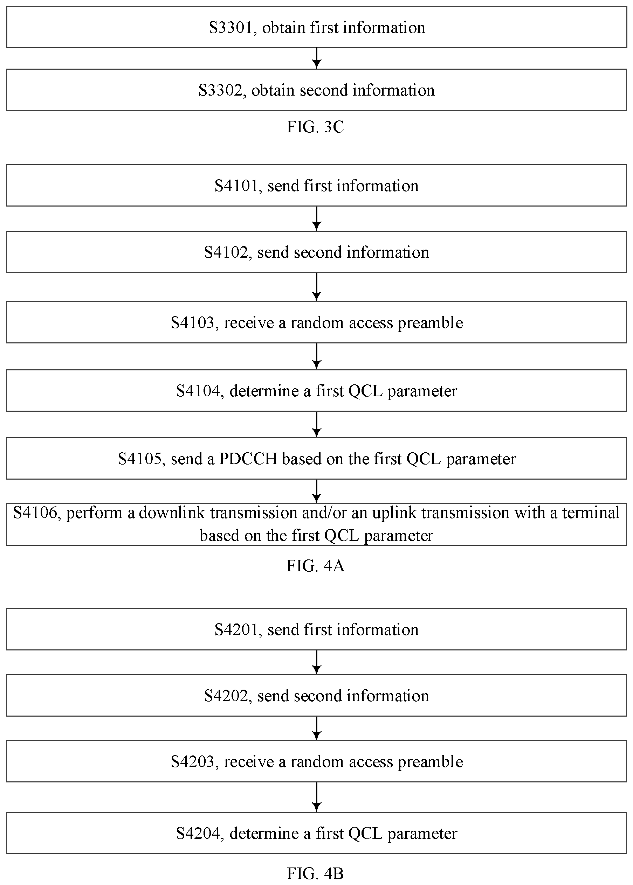

FIG. 3C is a flowchart illustrating a resource determination method according to an embodiment of the disclosure. As illustrated in FIG. 3C, embodiments of the disclosure relate to the resource determination method, which may be performed by a terminal. The method may include the following.

In step S3301, first information is obtained.

For an optional implementation of step S3301, reference may be made to the optional implementations of steps S2101 in FIG. 2A, and S3101 in FIG. 3A, and other related parts in the embodiments involved in FIG. 2A and FIG. 3A, which are not repeated here.

In some embodiments, the first information is used to configure a reference signal resource, and the reference signal resource is configured to determine a first QCL parameter.

In step S3302, second information is obtained.

For an optional implementation of step S3302, reference may be made to the optional implementations of steps S2102 in FIG. 2A, and S3102 in FIG. 3A, and other related parts in the embodiments involved in FIG. 2A and FIG. 3A, which are not repeated here.

In some embodiments, the second information is configured to determine random access resource information corresponding to the reference signal resource.

In some embodiments, the above steps are all optional.

In some embodiments, embodiments illustrated in FIG. 3C may also be combined with any one or more steps in embodiments illustrated in FIG. 3A as a new embodiment.

In some embodiments, the random access resource information includes at least one of:
an SSB index;
a CSI-RS resource index;
an RO;
a preamble index; or
a first cell index, configured to determine a first cell corresponding to a random access resource.

In some embodiments, configuration information of the reference signal resource includes at least one of:
a reference signal resource identifier; or
a second cell index, configured to determine a second cell corresponding to a reference signal resource identifier, where the second cell is a serving cell or a non-serving cell of a terminal.

In some embodiments, the reference signal resource is a reference signal resource corresponding to the QCL parameter, the QCL parameter corresponds to a TCI state, and different TCI states correspond to different instances of random access resource information,
the TCI state includes at least one of a joint TCI state, a downlink TCI state, or an uplink TCI state; and
the random access resource information includes at least one of an RO or a preamble index.

In some embodiments, the second cell is the non-serving cell of the terminal,
the reference signal resource is an SSB of the second cell; or
the reference signal resource is a CSI-RS resource, and a source reference signal corresponding to the CSI-RS resource is an SSB of the second cell.

In some embodiments,
the random access resource information includes an SSB index, the SSB index in the random access resource information is an SSB index of a first cell, and the first cell is a serving cell or a non-serving cell of the terminal; or
the random access resource information includes a CSI-RS resource index, and a source reference signal corresponding to the CSI-RS resource index in the random access resource information is an SSB index of a first cell.

In some embodiments,
the random access resource information does not include any RO, an RO corresponding to the random access resources is determined based on a first mapping relationship, and the first mapping relationship is a mapping relationship between SSB indexes of the first cell and ROs; and/or
the random access resource information does not include any preamble index, a preamble index corresponding to the random access resource is determined based on a second mapping relationship, and the second mapping relationship is a mapping relationship between SSB indexes of the first cell and preamble indexes.

In some embodiments, the first cell is the non-serving cell, and the method further includes:
receiving third information, where the third information is configured to determine the first mapping relationship and/or the second mapping relationship corresponding to the non-serving cell.

In some embodiments,
the random access resource information includes the SSB index, the first cell is the non-serving cell, and a first cell index in the random access resource information is an index of the first cell in an additional cell list; or
the random access resource information includes the SSB index, the first cell is the serving cell, and a first cell index in the random access resource information indicates that the first cell is the serving cell, or the random access resource information does not include any first cell index; or
the random access resource information includes the CSI-RS resource index, and a first cell index in the random access resource information indicates that the first cell is the serving cell, or the random access resource information does not include any first cell index.

In some embodiments, the method further includes:
determining a first reference signal resource corresponding to the first QCL parameter;
determining first random access resource information corresponding to the first reference signal resource; and
sending a random access preamble based on the first random access resource information.

In some embodiments, the method further includes:
receiving a physical downlink control channel (PDCCH) based on the first QCL parameter.

In some embodiments, the method further includes:
performing a downlink transmission and/or an uplink transmission based on the first QCL parameter.

FIG. 4A is a flowchart illustrating a resource determination method according to an embodiment of the disclosure. As illustrated in FIG. 4A, embodiments of the disclosure relate to the resource determination method, which may be performed by a network device. The method includes the following.

In step S4101, first information is sent.

For an optional implementation of step S4101, reference may be made to the optional implementation of step S2101 in FIG. 2A and other related parts in embodiments involved in FIG. 2A, which are not repeated here.

In some embodiments, the network device may send the first information to the terminal or other entities, but the disclosure is not limited thereto.

In step S4102, second information is sent.

For an optional implementation of step S4102, reference may be made to the optional implementation of step S2102 in FIG. 2A and other related parts in embodiments involved in FIG. 2A, which are not repeated here.

In some embodiments, the network device may send the second information to the terminal or other entities, but the disclosure is not limited thereto.

In step S4103, a random access preamble is received.

For an optional implementation of step S4103, reference may be made to the optional implementation of step S2105 in FIG. 2A, and other related parts in the embodiments involved in FIG. 2A, which are not repeated here.

In step S4104, a first QCL parameter is determined.

For an optional implementation of step S4104, reference may be made to the optional implementation of step S2106 in FIG. 2A, and other related parts in the embodiments involved in FIG. 2A, which are not repeated here.

In step S4105, a PDCCH is sent based on the first QCL parameter.

For an optional implementation of step S4105, reference may be made to the optional implementation of step S2107 in FIG. 2A, and other related parts in the embodiments involved in FIG. 2A, which are not repeated here.

In some embodiments, the network device may send the PDCCH to the terminal or other entities, but the disclosure is not limited thereto.

In step S4106, a downlink transmission and/or an uplink transmission is performed with a terminal based on the first QCL parameter.

For an optional implementation of step S4106, reference may be made to the optional implementation of step S2108 in FIG. 2A, and other related parts in the embodiments involved in FIG. 2A, which are not repeated here.

The methods according to embodiments of the disclosure may include at least one of the steps S4101 to S4106. For example, step S4102 may be implemented as an independent embodiment, step S4101 may be implemented as an independent embodiment, steps S4101 + S4102 may be implemented as an independent embodiment, steps S4101 + S4102 + S4103 may be implemented as an independent embodiment, steps S4101 + S4102 + S4103 + S4104 may be implemented as an independent embodiment, and steps S4101 + S4102 + S4103 + S4105 + S4106 may be implemented as an independent embodiment, but the disclosure is not limited thereto.

In some embodiments, steps S4101 to S4106 may be executed in an exchanged order or simultaneously.

In some embodiments, steps S4101 to S4106 are all optional.

FIG. 4B is a flowchart illustrating a resource determination method according to an embodiment of the disclosure. As illustrated in FIG. 4B, embodiments of the disclosure relate to the resource determination method, which may be performed by a network device. The method may include the following.

In step S4201, first information is sent.

For an optional implementation of step S4201, reference may be made to the optional implementations of steps S2101 in FIG. 2A, and S4101 in FIG. 4A, and other related parts in the embodiments involved in FIG. 2A and FIG. 4A, which are not repeated here.

In step S4202, second information is sent.

For an optional implementation of step S4202, reference may be made to the optional implementations of steps S2102 in FIG. 2A, and S4102 in FIG. 4A, and other related parts in the embodiments involved in FIG. 2A and FIG. 4A, which are not repeated here.

In step S4203, a random access preamble is received.

For an optional implementation of step S4203, reference may be made to the optional implementations of steps S2105 in FIG. 2A, and S4103 in FIG. 4A, and other related parts in the embodiments involved in FIG. 2A and FIG. 4A, which are not repeated here.

In step S4204, a first QCL parameter is determined.

For an optional implementation of step S4204, reference may be made to the optional implementations of steps S2106 in FIG. 2A, and S4104 in FIG. 4A, and other related parts in the embodiments involved in FIG. 2A and FIG. 4A, which are not repeated here.

In some embodiments, the above steps are all optional.

In some embodiments, embodiments illustrated in FIG. 4B may also be combined with any one or more steps in embodiments illustrated in FIG. 4A as a new embodiment.

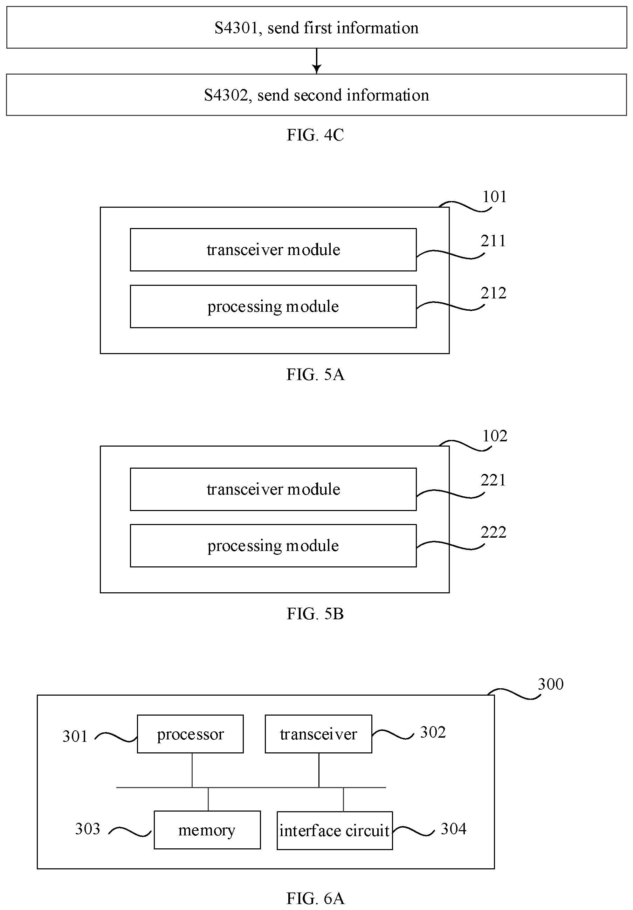

FIG. 4C is a flowchart illustrating a resource determination method according to an embodiment of the disclosure. As illustrated in FIG. 4C, embodiments of the disclosure relate to the resource determination method, which may be performed by a network device. The method may include the following.

In step S4301, first information is sent.

For an optional implementation of step S4301, reference may be made to the optional implementations of steps S2101 in FIG. 2A, and S4101 in FIG. 4A, and other related parts in the embodiments involved in FIG. 2A and FIG. 4A, which are not repeated here.

In some embodiments, the first information is used to configure a reference signal resource, and the reference signal resource is configured to determine a first QCL parameter.

In step S4302, second information is sent.

For an optional implementation of step S4302, reference may be made to the optional implementations of steps S2102 in FIG. 2A, and S4102 in FIG. 4A, and other related parts in embodiments involved in FIG. 2A and FIG. 4A, which are not repeated here.

In some embodiments, the second information is configured to determine random access resource information corresponding to the reference signal resource.

In some embodiments, the above steps are all optional.

In some embodiments, embodiments illustrated in FIG. 4C may also be combined with any one or more steps in embodiments illustrated in FIG. 4A as a new embodiment.

In some embodiments, the random access resource information includes at least one of:
an SSB index;
a CSI-RS resource index;
an RO;
a preamble index; or
a first cell index, configured to determine a first cell corresponding to a random access resource.

In some embodiments, configuration information of the reference signal resource includes at least one of:
a reference signal resource identifier; or
a second cell index, configured to determine a second cell corresponding to a reference signal resource identifier, where the second cell is a serving cell or a non-serving cell of a terminal.

In some embodiments, the reference signal resource is a reference signal resource corresponding to the QCL parameter, co-location Type D corresponds to a TCI state, and different TCI states correspond to different instances of random access resource information.

The TCI state includes at least one of a joint TCI state, a downlink TCI state, or an uplink TCI state; and
the random access resource information includes at least one of an RO or a preamble index.

In some embodiments, the second cell is the non-serving cell of the terminal,
the reference signal resource is an SSB of the second cell; or
the reference signal resource is a CSI-RS resource, and a source reference signal corresponding to the CSI-RS resource is an SSB of the second cell.

In some embodiments,
the random access resource information includes an SSB index, the SSB index in the random access resource information is an SSB index of a first cell, and the first cell is a serving cell or a non-serving cell of the terminal; or
the random access resource information includes a CSI-RS resource index, and a source reference signal corresponding to the CSI-RS resource index in the random access resource information is an SSB index of a first cell.

In some embodiments,
the random access resource information does not include any RO, an RO corresponding to the random access resources is determined based on a first mapping relationship, and the first mapping relationship is a mapping relationship between SSB indexes of the first cell and ROs; and/or
the random access resource information does not include any preamble index, a preamble index corresponding to the random access resource is determined based on a second mapping relationship, and the second mapping relationship is a mapping relationship between SSB indexes of the first cell and preamble indexes.

In some embodiments, the first cell is the non-serving cell, and the method further includes:
receiving third information, where the third information is configured to determine the first mapping relationship and/or the second mapping relationship corresponding to the non-serving cell.

In some embodiments,
the random access resource information includes the SSB index, the first cell is the non-serving cell, and a first cell index in the random access resource information is an index of the first cell in an additional cell list; or
the random access resource information includes the SSB index, the first cell is the serving cell, and a first cell index in the random access resource information indicates that the first cell is the serving cell, or the random access resource information does not include any first cell index; or
the random access resource information includes the CSI-RS resource index, and a first cell index in the random access resource information indicates that the first cell is the serving cell, or the random access resource information does not include any first cell index.

In some embodiments, the method further includes:
receiving a random access preamble, where the random access preamble is a random access preamble sent by a terminal based on first random access resource information, the first random access resource information is random access resource information corresponding to a first reference signal resource, and the first reference signal resource is a reference signal resource corresponding to the first QCL parameter determined by the terminal.

In some embodiments, the method further includes:
sending a physical downlink control channel (PDCCH) to the terminal based on the first QCL parameter.

In some embodiments, the method further includes:
performing a downlink transmission and/or an uplink transmission with the terminal based on the first QCL parameter.

In some embodiments of the disclosure, a communication system is provided. The communication system may include a terminal and a network device. The terminal may perform the resource determination method performed by the terminal in the foregoing embodiments of the disclosure; and the network device may perform the resource determination method performed by the network device in the foregoing embodiments of the disclosure.

Embodiments of the disclosure also provide an apparatus for implementing any one of the above methods. For example, an apparatus is provided, including units or modules for implementing the steps performed by the terminal in any one of the above methods. As another example, another apparatus is provided, including units or modules for implementing steps performed by the network device (for example, an access network device, a core network function node, a core network device, etc.) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Alternatively, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are implemented by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in a form of the hardware circuit, or partially implemented in the form of software called by the processor calling and the remaining part implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 5A is a block diagram illustrating a terminal according to an embodiment of the disclosure. As illustrated in FIG. 5A, the terminal 101 may include at least one of: a transceiver module 211 or a processing module 212, etc. In some embodiments, the transceiver module 211 is configured to receive first information, where the first information is used to configure a reference signal resource, and the reference signal resource is configured to determine a first QCL parameter; and to receive second information, where the second information is configured to determine random access resource information corresponding to the reference signal resource. For example, the transceiver module 211 may be configured to perform at least one of the communication steps such as sending and/or receiving (e.g., but is not limited to, steps S2101, S2102, S2105, S2107, S2108) performed by the terminal 101 in any of the above methods, which are not repeated here. For example, the processing module 212 may be configured to execute at least one of the other steps (e.g., but is not limited to, steps S2103, S2104, and S2106) performed by the terminal 101 in any of the above methods, which are not repeated here.

FIG. 5B is a block diagram illustrating a network device according to an embodiment of the disclosure. As illustrated in FIG. 5B, the network device 102 may include at least one of: a transceiver module 221 or a processing module 222. In some embodiments, the transceiver module 221 is configured to send first information, where the first information is used to configure a reference signal resource, and the reference signal resource is configured to determine a first QCL parameter; and to send second information, where the second information is configured to determine random access resource information corresponding to the reference signal resource. For example, the transceiver module 221 may be configured to perform at least one of the communication steps such as sending and/or receiving (e.g., but is not limited to, steps S2101, S2102, S2105, S2107, S2108) performed by the network device 102 in any of the above methods, which are not repeated here. For example, the processing module 222 may be configured to perform at least one of the other steps (e.g., but is not limited to, steps S2103, S2104, and S2106) performed by the network device 102 in any of the above methods, which are not repeated here.

In some embodiments, the transceiver module may include a sending module and/or a receiving module. The sending module and the receiving module may be separate or integrated together. For example, the transceiver module may be interchanged with a transceiver.

In some embodiments, the processing module may be one module or may include multiple sub-modules. For example, the multiple sub-modules respectively perform all or some of the steps required to be performed by the processing module. For example, the processing module may be interchanged with a processor.

FIG. 6A is a block diagram illustrating a communication device 300 according to an embodiment of the disclosure. The communication device 300 may be a network device (such as, an access network device, a core network device, etc.), or a terminal (e.g., a UE, etc.), or a chip, a chip system, or a processor, etc., that supports the network device to implement any one of the above methods, or a chip, a chip system, or a processor, etc., that supports the terminal to implement any one of the above methods. The communication device 300 may be configured to implement the method in the above method embodiments. For details, reference may be made to the description in the above method embodiments.

As illustrated in FIG. 6A, the communication device 300 may include one or more processors 301. The processor 301 may be a general-purpose processor or a special-purpose processor, such as a baseband processor or a central processing unit. The baseband processor may be configured to process communication protocols and communication data, and the central processing unit may be configured to control communication devices (such as base stations, baseband chips, terminals, terminal chips, DU or CU, etc.) to perform computer programs and process computer program data. For example, the communication device 300 may be configured to perform any one of the above methods. For example, one or more processors 301 are configured to call the instructions to cause the communication device 300 to perform any one of the above methods.

In some embodiments, the communication device 300 may also include one or more transceivers 302. When the communication device 300 includes one or more transceivers 302, the transceiver 302 may perform at least one of the communication steps such as sending and/or receiving (e.g., but is not limited to, steps S2101, S2102, S2105, S2107, S2108) in the above methods, and the processor 301 performs at least one of the other steps (e.g., but is not limited to, steps S2103, S2104, S2106).

In some embodiments, the transceiver may include a receiver and/or a transmitter, which may be separate or integrated together. For example, the terms such as transceiver, transceiver unit, transceiver machine, transceiver circuit, interface circuit, and interface may be used interchangeably; the terms such as transmitter, transmitting unit, transmitting machine, and transmitting circuit may be used interchangeably; and the terms such as receiver, receiving unit, receiving machine, and receiving circuit may be used interchangeably.

In some embodiments, the communication device 300 also includes one or more memories 303 for storing data. For example, all or some of the memory 303 may be located outside the communication device 300. In an alternative embodiment, the communication device 300 may include one or more interface circuits 304. For example, the interface circuit 304 is connected to the memory 303. The interface circuit 304 may be configured to receive data from the memory 303 or other devices, and may be configured to send data to the memory 303 or other devices. For example, the interface circuit 304 may read data stored in the memory 303 and send the data to the processor 301.

The communication device 300 in the description of the above embodiments may be a network device or a terminal, but the scope of the communication device 300 described in the present disclosure is not limited herein, and the structure of the communication device 300 may not be limited by FIG. 6A. The communication device may be a stand-alone device or may be a part of a larger device. For example, the communication device may be: (1) a stand-alone IC, a chip, a chip system or a subsystem; (2) a collection of ICs including one or more ICs, for example, the collection of ICs also including storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

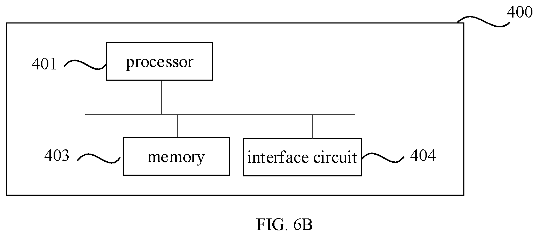

FIG. 6B is a block diagram illustrating a chip 400 according to an embodiment of the disclosure. For the case where the communication device 300 may be a chip or a chip system, reference may be made to the block diagram of the chip 400 illustrated in FIG. 6B, but the disclosure is not limited thereto.

The chip 400 includes one or more processors 401. The chip 400 is configured to perform any one of the above methods.

In some embodiments, the chip 400 also includes one or more interface circuits 404. For example, the terms such as interface circuit, interface, and transceiver pin may be used interchangeably. In some embodiments, the chip 400 also includes one or more memories 403 for storing data. For example, all or part of the memory 403 may be located outside of the chip 400.

For example, the interface circuit 404 is connected to the memory 403. The interface circuit 404 may be configured to receive data from the memory 403 or other devices, and the interface circuit 404 may be configured to send data to the memory 403 or other devices. For example, the interface circuit 404 may read data stored in the memory 403 and send the data to the processor 401.

In some embodiments, the interface circuit 404 performs at least one of the communication steps such as sending and/or receiving (e.g., but is not limited to, steps S2101, S2102, S2105, S2107, S2108) in the above methods. The interface circuit 404 performs communication steps such as sending and/or receiving in the above methods, for example, the interface circuit 404 performs data interaction between the processor 401, the chip 400, the memory 403 or the transceiver device. In some embodiments, the processor 401 may perform at least one of other steps (e.g., but is not limited to, steps S2103, S2104, S2106).

The modules and/or devices described in the various embodiments, such as virtual devices, physical devices, and chips, may be combined or separated arbitrarily as needed. For example, some or all of the steps may be performed collaboratively by a plurality of modules and/or devices, but the disclosure is not limited thereto.

Embodiments of the disclosure also provide a storage medium for storing instructions. When the instructions are run on the communication device 300, the communication device 300 is caused to implement any one of the above methods. For example, the storage medium is an electronic storage medium. For example, the storage medium is a computer-readable storage medium, but is not limited herein, and may also be a storage medium readable by other devices. For example, the storage medium may be a non-transitory storage medium, but the disclosure is not limited thereto and the storage medium may also be a transitory storage medium.

Embodiments of the disclosure also provides a program product. When the program product is performed by the communication device 300, the communication device 300 is caused to implement any one of the above methods. For example, the program product may be a computer program product.

Embodiments of the disclosure also provide a computer program. When the computer program is run on a computer, the computer is caused to implement any one of the above methods.

## Claims

1. A resource determination method, comprising:
receiving first information, wherein the first information is used to configure a reference signal resource, and the reference signal resource is configured to determine a first quasi-colocation (QCL) parameter; and
receiving second information, wherein the second information is configured to determine random access resource information corresponding to the reference signal resource.

2. The method of claim 1, wherein the random access resource information comprises at least one of:
a synchronization signal block (SSB) index;
a channel state information reference signal (CSI-RS) resource index;
a random access channel occasion (RO);
a preamble index; or
a first cell index, configured to determine a first cell corresponding to a random access resource.

3. The method of claim 1, wherein configuration information of the reference signal resource comprises at least one of:
a reference signal resource identifier; or
a second cell index, configured to determine a second cell corresponding to a reference signal resource identifier, wherein the second cell is a serving cell or a non-serving cell of a terminal.

4. The method of claim 3, wherein the reference signal resource is a reference signal resource corresponding to the QCL parameter, the QCL parameter corresponds to a transmission configuration indication (TCI) state, and different TCI states correspond to different instances of random access resource information,
the TCI state comprises at least one of a joint TCI state, a downlink TCI state, or an uplink TCI state; and
the random access resource information comprises at least one of an RO or a preamble index.

5. The method of claim 3, wherein the second cell is the non-serving cell of the terminal,
the reference signal resource is an SSB of the second cell; or
the reference signal resource is a CSI-RS resource, and a source reference signal corresponding to the CSI-RS resource is an SSB of the second cell.

6. The method of claim 5, wherein
the random access resource information comprises an SSB index, the SSB index in the random access resource information is an SSB index of a first cell, and the first cell is a serving cell or a non-serving cell of the terminal; or
the random access resource information comprises a CSI-RS resource index, and a source reference signal corresponding to the CSI-RS resource index in the random access resource information is an SSB index of a first cell.

7. The method of claim 6, wherein
the random access resource information does not comprise any RO, an RO corresponding to the random access resources is determined based on a first mapping relationship, and the first mapping relationship is a mapping relationship between SSB indexes of the first cell and ROs; and/or
the random access resource information does not comprise any preamble index, a preamble index corresponding to the random access resource is determined based on a second mapping relationship, and the second mapping relationship is a mapping relationship between SSB indexes of the first cell and preamble indexes.

8. The method of claim 7, wherein the first cell is the non-serving cell, and the method further comprises:
receiving third information, wherein the third information is configured to determine the first mapping relationship and/or the second mapping relationship corresponding to the non-serving cell.

9. The method of any one of claims 6 to 8, wherein
the random access resource information comprises the SSB index, the first cell is the non-serving cell, and a first cell index in the random access resource information is an index of the first cell in an additional cell list; or
the random access resource information comprises the SSB index, the first cell is the serving cell, and a first cell index in the random access resource information indicates that the first cell is the serving cell, or the random access resource information does not comprise any first cell index; or
the random access resource information comprises the CSI-RS resource index, and a first cell index in the random access resource information indicates that the first cell is the serving cell, or the random access resource information does not comprise any first cell index.

10. The method of any one of claims 1 to 9, further comprising:
determining a first reference signal resource corresponding to the first QCL parameter;
determining first random access resource information corresponding to the first reference signal resource; and
sending a random access preamble based on the first random access resource information.

11. The method of claim 10, further comprising:
receiving a physical downlink control channel (PDCCH) based on the first QCL parameter.

12. The method of claim 11, further comprising:
performing a downlink transmission and/or an uplink transmission based on the first QCL parameter.

13. A resource determination method, comprising:
sending first information, wherein the first information is used to configure a reference signal resource, and the reference signal resource is configured to determine a first quasi-colocation (QCL) parameter; and
sending second information, wherein the second information is configured to determine random access resource information corresponding to the reference signal resource.

14. The method of claim 13, wherein the random access resource information comprises at least one of:
a synchronization signal block (SSB) index;
a channel state information reference signal (CSI-RS) resource index;
a random access channel occasion (RO);
a preamble index; or
a first cell index, configured to determine a first cell corresponding to a random access resource.

15. The method of claim 13, wherein configuration information of the reference signal resource comprises at least one of:
a reference signal resource identifier; or
a second cell index, configured to determine a second cell corresponding to a reference signal resource identifier, wherein the second cell is a serving cell or a non-serving cell of a terminal.

16. The method of claim 15, wherein the reference signal resource is a reference signal resource corresponding to the QCL parameter, the QCL parameter corresponds to a transmission configuration indication (TCI) state, and different TCI states correspond to different instances of random access resource information, wherein
the TCI state comprises at least one of a joint TCI state, a downlink TCI state, or an uplink TCI state; and
the random access resource information comprises at least one of an RO or a preamble index.

17. The method of claim 15, wherein the second cell is the non-serving cell of the terminal,
the reference signal resource is an SSB of the second cell; or
the reference signal resource is a CSI-RS resource, and a source reference signal corresponding to the CSI-RS resource is an SSB of the second cell.

18. The method of claim 17, wherein
the random access resource information comprises an SSB index, the SSB index in the random access resource information is an SSB index of a first cell, and the first cell is a serving cell or a non-serving cell of the terminal; or
the random access resource information comprises a CSI-RS resource index, and a source reference signal corresponding to the CSI-RS resource index in the random access resource information is an SSB index of a first cell.

19. The method of claim 18, wherein
the random access resource information does not comprise any RO, an RO corresponding to the random access resources is determined based on a first mapping relationship, and the first mapping relationship is a mapping relationship between SSB indexes of the first cell and ROs; and/or
the random access resource information does not comprise any preamble index, a preamble index corresponding to the random access resource is determined based on a second mapping relationship, and the second mapping relationship is a mapping relationship between SSB indexes of the first cell and preamble indexes.

20. The method of claim 19, wherein the first cell is the non-serving cell, and the method further comprises:
receiving third information, where the third information is configured to determine the first mapping relationship and/or the second mapping relationship corresponding to the non-serving cell.

21. The method of any one of claims 18 to 20, wherein
the random access resource information comprises the SSB index, the first cell is the non-serving cell, and a first cell index in the random access resource information is an index of the first cell in an additional cell list; or
the random access resource information comprises the SSB index, the first cell is the serving cell, and a first cell index in the random access resource information indicates that the first cell is the serving cell, or the random access resource information does not comprise any first cell index; or
the random access resource information comprises the CSI-RS resource index, and a first cell index in the random access resource information indicates that the first cell is the serving cell, or the random access resource information does not comprise a first cell index.

22. The method of any one of claims 13 to 21, further comprising:
receiving a random access preamble, wherein the random access preamble is a random access preamble sent by a terminal based on first random access resource information, the first random access resource information is random access resource information corresponding to a first reference signal resource, and the first reference signal resource is a reference signal resource corresponding to the first QCL parameter determined by the terminal.

23. The method of claim 22, further comprising:
sending a physical downlink control channel (PDCCH) to the terminal based on the first QCL parameter.

24. The method of claim 23, further comprising:
performing a downlink transmission and/or an uplink transmission with the terminal based on the first QCL parameter.

25. A terminal, comprising:
a transceiver module, configured to receive first information, wherein the first information is used to configure a reference signal resource, and the reference signal resource is configured to determine a first quasi-colocation (QCL) parameter; and to receive second information, wherein the second information is configured to determine random access resource information corresponding to the reference signal resource.

26. A network device, comprising:
a transceiver module, configured to send first information, wherein the first information is used to configure a reference signal resource, and the reference signal resource is configured to determine a first quasi-colocation (QCL) parameter; and to send second information, wherein the second information is configured to determine random access resource information corresponding to the reference signal resource.

27. A communication device, comprising:
one or more processors,
wherein the communication device is configured to perform the resource determination method of any one of claims 1 to 12 or any one of claims 13 to 24.

28. A storage medium, having stored thereon instructions that, when run on a communication device, cause the communication device to perform the resource determination method of any one of claims 1 to 12 or any one of claims 13 to 24.

29. A communication system, comprising a terminal and a network device, wherein the terminal is configured to perform the resource determination method of any one of claims 1 to 12, and the network device is configured to perform the resource determination method of any one of claims 13 to 24.
